# EUROPEAN PATENT SPECIFICATION

(11) **EP 4 056 440 B1**
(45) Date of publication and mention of the grant of the patent: **27.05.2026**
(21) Application number: 20893704.5
(22) Date of filing: 03.07.2020
(51) Int. Cl.: G08G 1/16, B60W 30/182

(54) **VEHICLE ADJUSTMENT AND CONTROL METHOD, APPARATUS, AND ELECTRONIC DEVICE**
FAHRZEUGANPASSUNGS- UND -STEUERVERFAHREN, GERÄT UND ELEKTRONISCHE VORRICHTUNG
PROCÉDÉ DE RÉGLAGE ET DE COMMANDE DE VÉHICULE, APPAREIL ET DISPOSITIF ÉLECTRONIQUE

(30) Priority: 25.11.2019 CN 201911166395
(43) Date of publication of application: 14.09.2022
(73) Proprietor: Huawei Technologies Co., Ltd., Shenzhen, Guangdong 518129 (CN)
(72) Inventor: FU, Jiali, Shenzhen, Guangdong 518129 (CN); ZHANG, Huimin, Shenzhen, Guangdong 518129 (CN)
(74) Representative: Körber, Martin Hans
(86) International application number: PCT/CN2020/100065
(87) International publication number: WO 2021/103536

(56) References cited:
- WO-A1-2017/147750
- WO-A1-2017/161498
- WO-A1-2018/000386
- CN-A- 102 831 768
- CN-A- 106 530 833
- CN-A- 106 553 652
- CN-A- 106 843 210
- CN-A- 110 920 619
- JP-A- 2017 030 748
- JP-A- 2018 167 647
- JP-B2- 6 241 531
- US-A1- 2019 084 566
- US-A1- 2019 111 925

## Description

### TECHNICAL FIELD

This application relates to the field of Internet of vehicles and intelligent automobile technologies, and specifically, to a vehicle regulation method and apparatus, and an electronic device.

### BACKGROUND

At present, automobiles have entered lives of people, and traveling of people increasingly depends on automobiles. Automobile driving is a complex activity, and long-term driving is very likely to make people feel fatigued. Therefore, a demand of people for automated automobile driving gradually becomes stronger.

An in-vehicle intelligent system (in-vehicle control center) or an automated driving system that is configured to perform or assist automated vehicle driving has become an urgent demand of people. Similar to a computer operating system in the Internet or a mobile operating system in the mobile Internet, the in-vehicle intelligent system or the automated driving system is a medium for obtaining, by a user, information from the Internet and is also a medium for interacting, by the user, with a conventional vehicle component, and is a most important node in the Internet of vehicles.

Currently, most in-vehicle intelligent systems or automated driving systems can meet control of only a single vehicle, and have difficulty in controlling and negotiating about driving parameters of a plurality of vehicles.

Document US 2019/0084566 A1 discloses a driving system and method for a vehicle including: acquiring driving control data from a first autonomous driving vehicle, determining a driving speed based on the acquired driving control data; and based on the driving speed, generating a control signal configured to track the first autonomous driving vehicle within a predetermined distance.

### SUMMARY

Embodiments of this application provide a vehicle regulation method and apparatus, to regulate a plurality of vehicles traveling on a same road, thereby improving driving safety and road utilization. The invention is defined in the appended claims.
In the following, parts of the description and drawings referring to embodiments which are not covered by the claims are not presented as embodiments of the invention, but as examples useful for understanding the invention.

According to a first aspect, a vehicle regulation method is according to appended claim 1.

According to a second aspect, a vehicle regulation apparatus is provided according to appended claim 7.

### BRIEF DESCRIPTION OF DRAWINGS

FIG. 1 is a schematic diagram of a structure of a transport system according to an embodiment of this application;
FIG. 2 is a schematic block diagram of a structure of a vehicle according to an embodiment of this application;
FIG. 3 is a schematic diagram of a structure of another transport system according to an embodiment of this application;
FIG. 4 is a schematic diagram of a structure of still another transport system according to an embodiment of this application;
FIG. 5 is a flowchart of a vehicle regulation method according to an embodiment of this application;
FIG. 6 is a flowchart of another vehicle regulation method according to an embodiment of this application;
FIG. 7 is a flowchart of still another vehicle regulation method according to an embodiment of this application;
FIG. 8 is a schematic block diagram of a vehicle regulation apparatus according to an embodiment of this application;

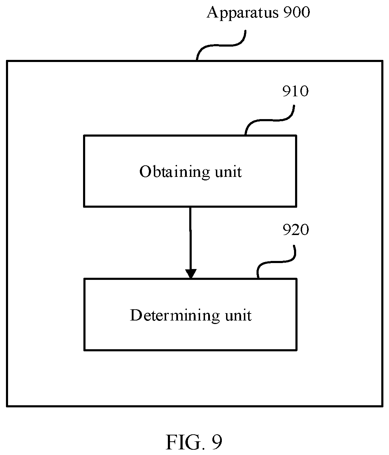

FIG. 9 is a schematic block diagram of another vehicle adjustment apparatus according to an embodiment of this application;
FIG. 10 is a schematic block diagram of still another vehicle adjustment apparatus according to an embodiment of this application;
FIG. 11 is a schematic block diagram of an electronic device according to an embodiment of this application;
FIG. 12 is a schematic block diagram of another electronic device according to an embodiment of this application; and
FIG. 13 is a schematic block diagram of still another electronic device according to an embodiment of this application.

### DESCRIPTION OF EMBODIMENTS

The following describes technical solutions in embodiments of the present invention with reference to accompanying drawings. Apparently, the described embodiments are merely some but not all of the embodiments of this application.

Reference to "one embodiment" or "some embodiments" described in this specification or the like means that one or more embodiments of this application include a particular feature, structure, or characteristic described in combination with the embodiment. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized.

In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of the embodiments of this application, "a plurality of" means two or more than two.

The terms "first" and "second" in the embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. The terms "include", "comprise", "have", and their variants all mean "include but are not limited to", unless otherwise specifically emphasized.

According to a solution, an in-vehicle intelligent system may invoke an electronic map interface based on a current geographical location and a traveling direction of a vehicle in which the in-vehicle intelligent system is located, to obtain a road roughness status and/or traffic sign data of a to-be-traveled road segment, and then determine a road type of the to-be-traveled road segment based on the road roughness status and/or the traffic sign data of the to-be-traveled road segment, to switch a driving mode.

According to another solution, an in-vehicle intelligent system may determine a driving mode based on a personal driving preference of a current driver or passenger of a vehicle. The driving mode includes but is not limited to a "caution" mode, a "sports" mode, a "driver participation" mode, or the like.

In the two solutions, when determining a driving mode, a current vehicle does not consider a driving mode of a surrounding vehicle, and does not negotiate with the surrounding vehicle. Therefore, a driving mode determining manner is relatively simple. As a result, it is likely that the current vehicle is inconsistent with the surrounding vehicle in driving mode, causing traffic chaos and increasing a risk that a traffic accident occurs.

The embodiments of this application provide a vehicle regulation method. Traveling information of a current vehicle and traveling information of a surrounding vehicle of the current vehicle may be obtained, and an adjustment policy may be determined based on the traveling information of the current vehicle and the traveling information of the surrounding vehicle of the current vehicle, to adjust a driving mode (lane) of the current vehicle or the surrounding vehicle of the current vehicle according to the adjustment policy.

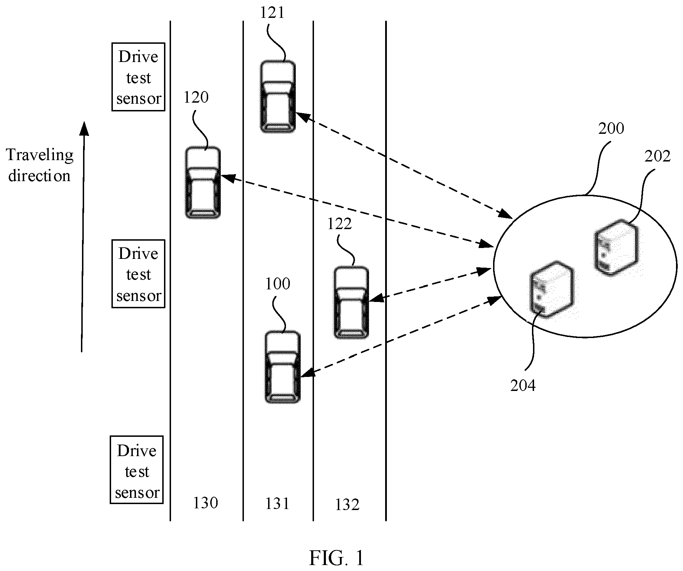

FIG. 1 shows a transport system. The transport system may be an intelligent transport system (intelligent transport system, ITS). The intelligent transport system may obtain, in real time, information about a vehicle connected to the intelligent transport system, and perform processing and running, to accurately provide a transport service for the vehicle in real time. As shown in FIG. 1, the intelligent transport system may include a management center 200 and a plurality of vehicles. The management center 200 may be connected to each of the plurality of vehicles by using a network.

For example, the management center 200 may be an integrated host server, and includes a vehicle control subsystem 202 and a transport information subsystem 204. The vehicle control subsystem 202 can perform the vehicle regulation method provided in the embodiments of this application. The transport information subsystem 204 may also exchange information with each of the plurality of vehicles, for example, may obtain a driving mode, a location, and traveling information of each of the plurality of vehicles. The traveling information includes information such as a vehicle driving automation level, driver information, passenger information, a vehicle performance parameter, or a travel requirement.

The transport system shown in FIG. 1 may include a vehicle 100, a vehicle 120, a vehicle 121, a vehicle 122, and the like. For the vehicle 120, the vehicle 121, the vehicle 122, and the like, refer to the vehicle 100 for implementation. Details are not described herein again. One or more of the vehicles in the transport system shown in FIG. 1 may travel on a same lane, or may travel on different lanes. For example, it may be specified that the vehicle 100 and the vehicle 121 currently travel on a lane 131, the vehicle 120 currently travels on a lane 120, and the vehicle 122 travels on a lane 132.

In some embodiments, the transport system shown in FIG. 1 further includes a plurality of drive test sensors. The plurality of drive test sensors may be disposed on one side or both sides of a road based on a preset spacing. Each drive test sensor can detect a location of a vehicle in a detection range of the drive test sensor. The preset spacing is less than or equal to the detection range of the drive test sensor, so that a location of each vehicle on the road can be persistently detected by using the plurality of drive test sensors. A wireless communications system 1041 of each vehicle may broadcast a vehicle identifier of the vehicle to the drive test sensor. In an example, the drive test sensor may actively report a vehicle identifier and a location of each vehicle to the management center 200, so that the management center can obtain the location of each vehicle. In an example, the drive test sensor may passively report a vehicle identifier and a location of each vehicle to the management center 200. For example, the drive test sensor may report a location of a vehicle corresponding to a vehicle identifier to the management center 200 in response to a location request from the management center 200, where the location request may include the vehicle identifier.

Next, the vehicle 100 is used as an example to provide an example description of the vehicle in this embodiment of this application.

The vehicle 100 may be any one of the plurality of vehicles, and may be an automobile or may be a vehicle in another form. For example, the vehicle may be a vehicle in a form of a car, a bus, a truck, a motorcycle, an agricultural locomotive, a parade float, a game car in an amusement park, or the like.

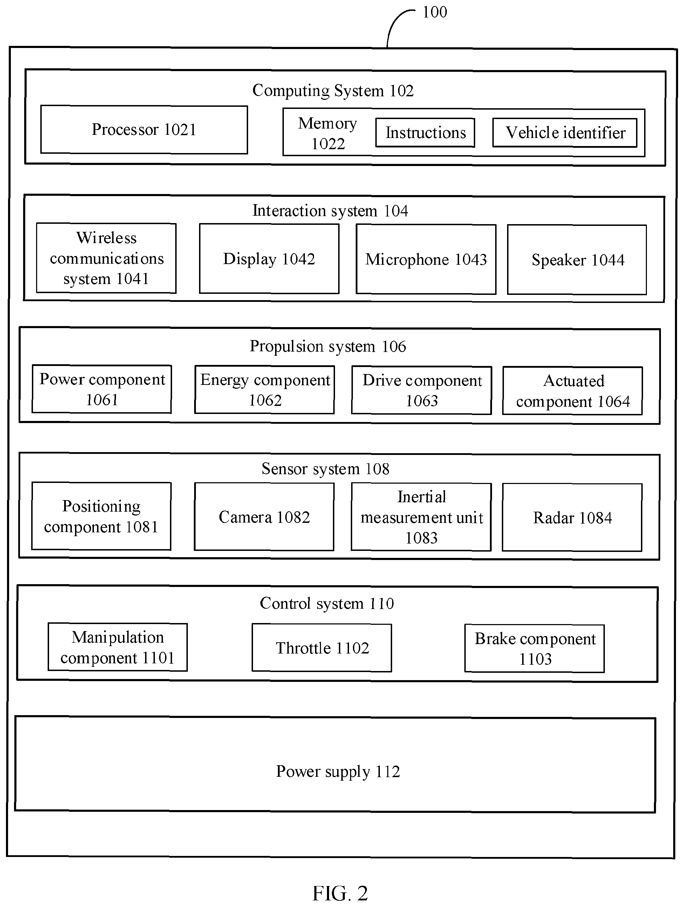

FIG. 2 is a schematic diagram of an example structure of the vehicle 100.

Referring to FIG. 2, the vehicle 100 may include a computing system 102, an interaction system 104, a propulsion system 106, a sensor system 108, a control system 110, and a power supply 112. The computing system 102 may include a processor 1021, a memory 1022, and the like. The interaction system 104 may include a wireless communications system 1041, a display 1042, a microphone 1043, a speaker 1044, and the like. The propulsion system 106 may include a power component 1061, an energy component 1062, a drive component 1063, an actuated component 1064, and the like. The sensor system 108 may include a positioning component 1081, a camera 1082, an inertial measurement unit 1083, a radar 1084, and the like. The control system may include a manipulation component 1101, a throttle 1102, a brake component 1103, and the like.

It may be understood that the structure illustrated in this embodiment of this application does not constitute a specific limitation on the vehicle 100. In some other embodiments of this application, the vehicle 100 may include more or fewer components than those shown in the figure, or combine some components, or divide some components, or have different component arrangements. The components shown in the figure may be implemented by using hardware, software, or a combination of software and hardware.

The components of the vehicle 100 may be connected together by using a system bus (for example, a controller area network bus (controller area network bus), a CAN bus), a network, and/or another connection mechanism, so that the components can work in an interconnection manner.

The processor 1021 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU). Different processing units may be independent components, or may be integrated into one or more processors.

The memory 1022 may be configured to store a computer executable program code, where the executable program code includes instructions. The memory 1022 may include a program storage area and a data storage area. The program storage area may store information such as a vehicle identifier, and may further store an operating system, an application required by at least one function (for example, a voice play function or an image play function), and the like. In addition, the memory 1022 may include a high-speed random access memory, and may further include a nonvolatile memory, for example, at least one magnetic disk storage device, a flash storage device, or a universal flash storage (universal flash storage, UFS).

The processor 1021 may perform the following various automobile functions and data processing by running the instructions stored in the memory 1022.

For example, the computing system 102 may be implemented as an in-vehicle intelligent system or an automated driving system; and may implement automated driving of the vehicle 100 (when the vehicle 100 travels, the vehicle 100 is completely autonomously driven with no control of a driver or a little control of the driver), or may implement semi-automated driving of the vehicle 100 (when the vehicle travels, the vehicle is not completely autonomously driven with moderate control of the driver). The driver may alternatively manually drive the vehicle 100 (the driver highly controls the vehicle 100). It may be specified that automated driving, semi-automated driving, and manual vehicle control respectively correspond to different automation levels. The wireless communications system 1041 of the vehicle 100 may report a current automation level of the vehicle 100 to the management center 200.

For example, the computing system 102 may be connected to a mobile terminal (such as a mobile phone) in a wired (data line) or wireless (Bluetooth) manner, and may further obtain data in the mobile terminal. The data may include driver information. Specifically, the driver may register with a traffic management application that can be installed in the mobile terminal, and registration information may include information such as identity information, a gender, and a driving age of the driver. The traffic management application may obtain, based on the identity information of the driver by using a data interface provided by a traffic management department, information such as historical violation information corresponding to the driver. Information such as the historical violation information and the driving age may be referred to as the driver information. The computing system 102 may report the driver information to the management center 200 by using the wireless communications system 1041.

For example, the data obtained by the computing system 102 from the mobile terminal includes a travel requirement, such as an average traveling speed that needs to be used for arrival at a place at specific time. Specifically, it may be specified that a current moment is 8:30, it is necessary to arrive at a company at 9:00 to punch in, and a distance between a current location and the company is 30 km. Therefore, a travel requirement is traveling at a speed not lower than 60 km/h. The computing system 102 may report the travel requirement to the management center 200 by using the wireless communications system 1041.

For example, the camera 1082 may be configured to monitor passenger information in the vehicle. For example, whenever a vehicle door is closed, the camera may be triggered to photograph an in-vehicle environment, and a taken photo or video may be transmitted to the computing system 102 for identification. The computing system 102 may analyze and identify an age of a passenger in the photo or the video, and report an identified age of each passenger to the management center 120 by using the wireless communications system 1041.

For example, the computing system 102 may report, as a vehicle performance parameter, an identifier, mileage, or a power parameter that is of the vehicle 100 and that is stored in the memory 1022 of the computing system 102 to the management center 120 by using the wireless communications system 1041. In an example, the identifier of the vehicle may be a vehicle identification number (vehicle identification number, VIN). The VIN is a unique set of numbers used for the vehicle, and may be used to identify a manufacturer, an engine, a chassis sequence number, and other performance of the vehicle.

In an example, the computing system 102 may invoke the data interface provided by the traffic management department, to read a used age and a specified use age of the vehicle 108, and report, as vehicle performance parameters, the used age and the specified use age of the vehicle 108 to the management center 120 by using the wireless communications system 1041.

The foregoing is merely an example description of information that can be reported by the vehicle 100 to the management center 200, and imposes no limitation. In this embodiment of this application, the vehicle 100 may alternatively report other information to the management center 200. Other pieces of information are not enumerated herein.

In some embodiments, the computing system 102 may include a vehicle control unit. As one of key technologies of a battery electric vehicle, the vehicle control unit is a core control component of the complete vehicle. The vehicle control unit is configured to complete coordination of numerous tasks when the vehicle travels. Main tasks include: communicating with the subsystem; collecting an operating signal of the driver to identify an intention of driver; and monitoring a traveling status of the vehicle, to detect and identify a vehicle fault, and store fault information, thereby ensuring safe traveling of the vehicle. The vehicle control unit further includes a plurality of independent motor control units. The vehicle control unit exchanges information with the motor control unit by using a bus. The vehicle control unit is a controller hub of the complete vehicle, and may exchange information with a signal sensor, an active steering controller, and an electric drive controller in a CAN bus communications manner, to implement signal collection, control policy decision, and drive signal output.

The vehicle control unit collects and processes a signal (such as information about an accelerator pedal or a brake pedal) from a sensor, and is responsible for power-on/off logic control of the controller and power-on/off logic control of the motor control unit. The vehicle control unit is further responsible for torque calculation: driver-required torque calculation, mechanical braking and electrical braking torque allocation, front and rear axle bearing drive/braking torque, and 4-wheel motor torque allocation. The vehicle control unit is further responsible for energy optimization management: charging control, power allocation based on motor running efficiency, and braking energy recovery control. The vehicle control unit is further responsible for vehicle dynamics control: vehicle status identification, yaw control, anti-skid control, anti-lock control, anti-roll control, and active steering control. The vehicle control unit is further responsible for monitoring and diagnosis functions: bus node sending/receiving monitoring, sensor failure diagnosis, torque monitoring, CPU monitoring and diagnosis, fault management, and a troubleshooting safety measure (such as vehicle speed reduction/limitation processing).

The vehicle control unit may exchange data with other control subunits (such as a motor controller, a power management system, and a dashboard) through CAN network communications. The motor control unit receives a command delivered by the vehicle control unit by using a CAN bus, to convert chemical energy of a battery pack into mechanical energy of a motor, and then transmit power to wheels by using a drive system, to ensure traveling power of the vehicle.

In some embodiments, the computing system 102 may further include a body control unit. The body control unit is an electronic field module that manages a body of the vehicle, and supports a plurality of functions. A typical body control module includes a microprocessor and is configured to control functions of electronic devices (power windows, a wiper, side-view mirrors, and the like) classified under the body. In addition, a port is further provided in the body control unit, to communicate with different body control modules, dashboards, sensors, and actuators.

In some embodiments, the computing system 102 may include an intelligent driving controller, configured to process data from sensors.

The wireless communications system 1041 may include one or more antennas, modems, baseband processors, or the like, and may communicate with the management center 200, another vehicle, and another communications entity. Usually, the wireless communications system may be configured to perform communications according to one or more communications technologies, such as a mobile communications technology such as 2G/3G/4G/5G, and a wireless communications technology such as a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communications (near field communications, NFC), infrared (infrared, IR). Other communications technologies are not enumerated herein.

The wireless communications system 1041 may receive driving regulation information from the management center 200 or another management device, and transmit the driving regulation information to the computing system 102. The computing system 102 may perform corresponding regulation on the vehicle 100 based on the driving regulation information, or display the driving regulation information by using the display, to facilitate decision making by the driver.

The display 1042 is configured to display an image, a video, and the like. The display 1042 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), Miniled, MicroLed, Micro-oLed, quantum dot light emitting diodes (quantum dot light emitting diodes, QLED), or the like.

In some embodiments, the display panel may be covered by a touch panel. After detecting a touch operation on or near the touch panel, the touch panel may transmit the touch operation to the processor 1021 to determine a touch event type. Visual output related to the touch operation may be provided on the display 1042. In some other embodiments, a location of a touch panel may be different from a location of the display 1042.

The microphone 1043, also referred to as a "mike" or a "microphone", is configured to convert a sound signal into an electrical signal. When a user wants to control the vehicle 100 by using a voice, the user may produce a sound by enabling the mouth to approach the microphone 1043, to enter a voice command to the microphone 1043. At least one microphone 1043 may be disposed in the vehicle 100. In some embodiments, two microphones 1043 may be disposed in the vehicle 100, to collect a sound signal and further implement a noise reduction function. In some other embodiments, three, four, or more microphones 1043 may be alternatively disposed in the electronic device 100, to collect an audio signal and reduce noise. The microphones may further identify a sound source, implement a directional recording function, and the like.

The speaker 1044, also referred to as a "horn", is configured to convert an audio electrical signal into a sound signal. The vehicle 100 may listen to music or prompt information by using the speaker 1044.

The power component 1061 may be an engine, and may be any one or a combination of a plurality of engines such as a gasoline engine, an electric vehicle motor, a diesel engine, or a hybrid engine, or may be an engine in another form.

The energy component 1062 may be an energy source, and completely or partially provide power for the power component 1061. That is, the power component 1061 may be configured to convert energy provided by the energy component 1062 into mechanical energy. Energy that can be provided by the energy component 1062 includes gasoline, diesel, other petroleum-based fuel, propane, other compressed-gas-based fuel, anhydrous alcohol, a photovoltaic module, a battery, and other electric power sources. The energy component 1062 may further include any combination of a fuel tank, a battery, a capacitor, and/or a flywheel. In some embodiments, the energy component 1062 may also provide energy for other systems of the vehicle 100.

The drive component 1063 may include a transmission, a clutch, a differential, a drive shaft, and other components. The drive component 1063 may be configured to transmit mechanical energy from the power component 1061 to the actuated component 1064.

The actuated component 1064 may include a wheel, a tire, and the like. The wheel may be configured in various styles, including a four-wheel style such as a unicycle, a two-wheeler/motorcycle, a tricycle, or a car/truck, and the like. The tire may be attached to the wheel. The wheel may be attached to the drive component 1063, and may rotate in response to mechanical power transmitted by the drive component 1063, to drive the vehicle 100 to travel.

The positioning component 1081 may be configured to estimate a location of the vehicle 100. The positioning component 1081 may include a transceiver configured to estimate a location of the vehicle 100 relative to the earth based on satellite positioning data. In some embodiments, the computing system 102 may be configured to estimate a road that the vehicle 100 may travel and a location of the vehicle 100 on the road with reference to map data by using the positioning component 1081. Specifically, the positioning component 1081 may include a global positioning system (global positioning system, GPS) module, a BeiDou navigation satellite system (beidou navigation satellite system, BDS), a Galileo satellite navigation system (Galileo satellite navigation system), or the like.

The camera 1082 may include an out-of-vehicle camera configured to capture an external environment of the vehicle 100, or may include an in-vehicle camera configured to capture an internal environment of the vehicle 100. The camera 1082 may be a camera that detects visible light, or may be a camera that detects light (an infrared ray, an ultraviolet ray, or the like) from other parts of a spectrum. The camera 1082 may be configured to capture a two-dimensional image, or may be configured to capture a depth image.

The inertial measurement unit (inertial measurement unit, IMU) 1083 is configured to sense any combination of sensors that sense location and direction changes of the vehicle 100 based on an inertial acceleration. In some embodiments, the inertial measurement unit 1083 may include one or more accelerometers and gyroscopes.

The radar 1084 may include a sensor configured to sense or detect, by using a lightwave or a sound wave, an object in an environment in which the vehicle 100 is located. Specifically, the radar 1084 may include a laser radar, a millimeter wave radar, an ultrasonic radar, or the like.

The manipulation component 1101 may be a component configured to adjust a traveling direction of the vehicle 100 in response to a driver operation or a computer instruction.

The throttle 1102 may be a component configured to control a running speed and an acceleration of the power component 1061 to control a speed and an acceleration of the vehicle 100.

The brake component 1103 may be a component configured to reduce a traveling speed of the vehicle 100. For example, the brake component 1103 may reduce a rotational speed of the wheel in the actuated component 1064 by using friction.

The power supply 112 may be configured to supply power to some or all components of the vehicle 100. In some embodiments, the power supply 112 may include a lithium-ion battery or a lead-acid battery that can be repeatedly charged and discharged. In some embodiments, the power supply 112 may include one or more battery packs. In some embodiments, the power supply 112 and the energy component 1062 may be implemented together. Chemical energy provided by the power supply 112 may be converted into mechanical energy of the motor by using the power component 1061, and the mechanical energy is transmitted to the actuated component 1064 by using the drive component 1063, thereby implementing traveling of the vehicle 100.

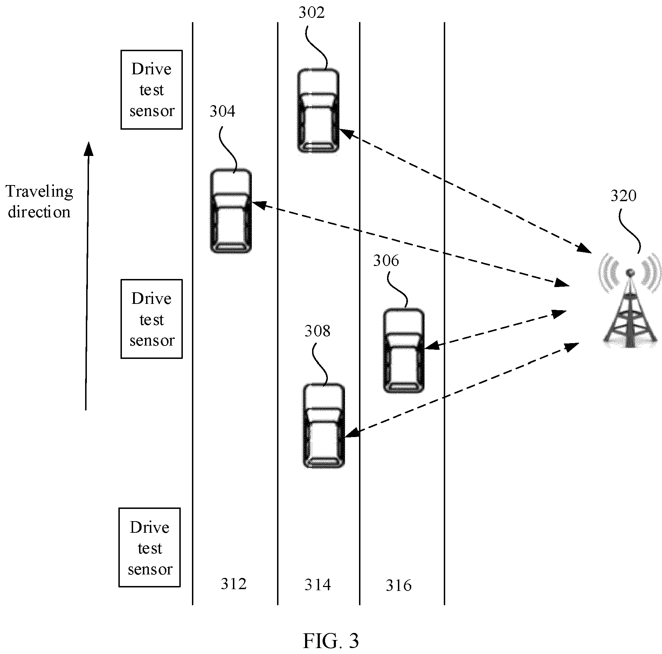

FIG. 3 shows another transport system. In the transport system, a plurality of vehicles may communicate with each other by using a network device 320. The network device 320 may be a base station. For example, the network device 320 may be a generation NodeB (generation NodeB, gNB) in a 5th generation (5th generation, 5G) mobile communications system, an evolved NodeB (evolutional NodeB, eNB or eNodeB) in a 4th generation (4th generation, 4G) mobile communications system, a base station in a future communications system, a base station in another possible radio access technology, or the like. Other base stations are not enumerated herein.

The transport system shown in FIG. 3 may include a vehicle 302, a vehicle 304, a vehicle 306, and a vehicle 308. One or more of the vehicles in the transport system shown in FIG. 1 may travel on a same lane, or may travel on different lanes. For example, it may be specified that the vehicle 302 and the vehicle 308 travel on a lane 314, the vehicle 304 travels on a lane 312, and the vehicle 306 travels on a lane 316.

For the vehicle in the transport system shown in FIG. 3, refer to the foregoing description of the vehicle 100 for implementation.

In some embodiments, a computing system of each of one or more of the vehicles in the transport system shown in FIG. 3 may execute functions of the management center 200 in combination with a wireless communications system.

In some embodiments, a mobile terminal (for example, a mobile phone or a tablet computer) in each of one or more of the vehicles in the transport system shown in FIG. 3 may execute functions of the management center 200. The mobile terminal may communicate with each vehicle by using the network device 320.

In some embodiments, the transport system shown in FIG. 3 further includes a plurality of drive test sensors. For a function of the drive test sensor, refer to the foregoing description of the embodiment shown in FIG. 1 for implementation. Details are not described herein again.

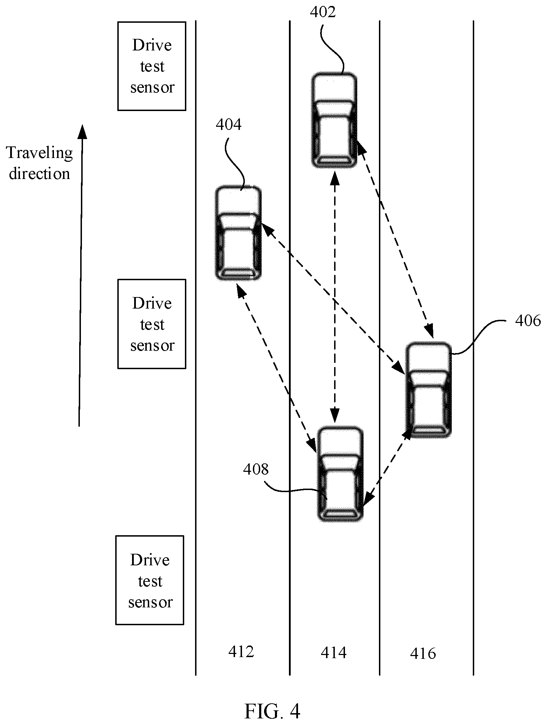

FIG. 4 shows still another transport system. The transport system may include a plurality of vehicles, and the plurality of vehicles may perform networking with each other, and therefore may directly communicate with each other. For each vehicle, refer to the foregoing description of the vehicle 100 for implementation.

One or more of the vehicles may travel on a same lane, or may travel on different lanes. For example, it may be specified that a vehicle 402 and a vehicle 408 travel on a lane 414, a vehicle 404 travels on a lane 412, and a vehicle 406 travels on a lane 416.

In some embodiments, a computing system of each of one or more of the vehicles in the transport system shown in FIG. 4 may execute functions of the management center 200 in combination with a wireless communications system.

In some embodiments, a mobile terminal (for example, a mobile phone or a tablet computer) in each of one or more of the vehicles in the transport system shown in FIG. 4 may execute functions of the management center 200. The mobile terminal may communicate with each vehicle.

In some embodiments, the transport system shown in FIG. 4 further includes a plurality of drive test sensors. For a function of the drive test sensor, refer to the foregoing description of the embodiment shown in FIG. 1 for implementation. Details are not described herein again.

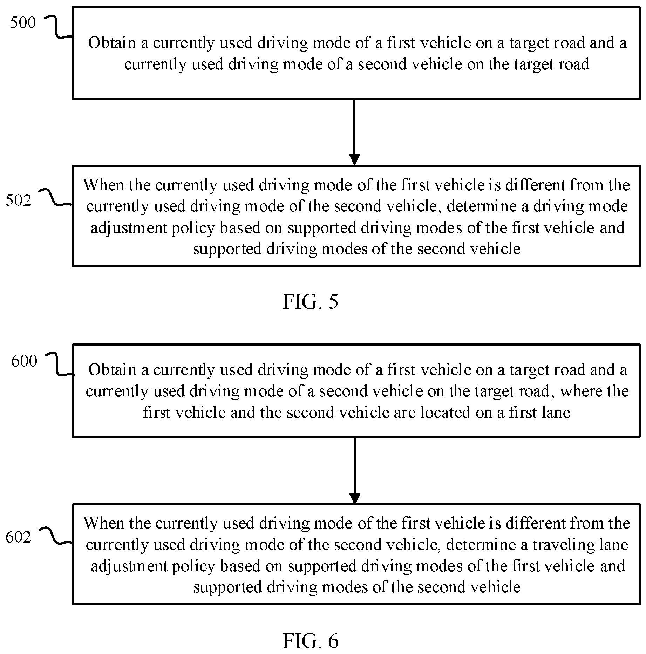

FIG. 5 is a flowchart of a vehicle regulation method according to an embodiment of this application. The method may be performed by a vehicle regulation device. The vehicle regulation device may be the management center 200 shown in FIG. 1, may be the computing system of each of the one or more of the plurality of vehicles shown in FIG. 3, may be the computing system of each of the one or more of the plurality of vehicles shown in FIG. 4, or may be a mobile terminal.

A driving mode adjustment policy of a plurality of vehicles traveling on a same road may be determined by using the method shown in FIG. 5. The plurality of vehicles include a first vehicle and a surrounding vehicle of the first vehicle. The driving mode adjustment policy may be used to adjust a driving mode of the first vehicle or the surrounding vehicle of the first vehicle.

In some embodiments, the vehicle regulation device may determine the surrounding vehicle of the first vehicle based on a location of the first vehicle. The surrounding vehicle of the first vehicle is a vehicle whose distance from the first vehicle is less than or equal to a first threshold. The first threshold may be a preset value, for example, 200 meters, 500 meters, or 1000 meters. The first threshold may be alternatively a value determined based on a traveling speed of the first vehicle, for example, may be a moved distance during traveling for 0.5 minute, 0.8 minute, or 1 minute at the traveling speed of the first vehicle.

In an illustrative example, the surrounding vehicle of the first vehicle is a vehicle, whose distance from the first vehicle is less than or equal to a first threshold, traveling in front of the first vehicle. The vehicle traveling in front of the first vehicle may include a vehicle located on a same lane as the first vehicle, and may also include a vehicle located on a different lane from the first vehicle. In an example in which the first vehicle is the vehicle 100 shown in FIG. 1, the surrounding vehicle of the first vehicle may include the vehicle 121, and may further include the vehicle 120 and the vehicle 122.

In the foregoing embodiment, for a manner in which the vehicle regulation device obtains a location of each vehicle, refer to the foregoing description of the embodiment shown in FIG. 1. Details are not described herein again.

The driving mode may be a traveling state of a vehicle or a traveling state that the vehicle should reach, where the state is defined or determined by using one or more driving parameters. For example, the driving mode may be a comfortable mode, and a traveling state of a vehicle that uses the mode or a state that the vehicle should reach is as follows: smooth traveling, slow deceleration, slow deceleration, no excessively fast traveling, and the like. For another example, the driving mode may be a smooth (energy saving) mode, and a traveling state of a vehicle that uses the mode or a state that the vehicle should reach is as follows: a relatively constant average speed per hour, and the like. For another example, the driving mode may be a sports mode, and a traveling state of a vehicle that uses the mode or a state that the vehicle should reach is as follows: a relatively high speed per hour (for example, an average speed per hour of at least 80 km/h), and the like. For another example, the driving mode may be an efficient (fuel consumption) mode, and a traveling state of a vehicle that uses the mode or a state that the vehicle should reach is as follows: in a traffic jam, performing lane change when allowed, to reach a destination as fast as possible. Other examples are not enumerated herein.

In an illustrative example, driving modes and corresponding driving parameters that are shown in Table 1 are provided.

**Table 1**

| Driving mode | Driving parameter |
|---|---|
| Comfortable mode | Smooth driving, no sudden braking, no sudden acceleration, and still keeping smooth and not bumpy when a road is uneven |
| Smooth (energy-saving) mode | Constant average speed per hour, where an average speed per hour fluctuates by at most 10 km/h |
| Sports mode | Relatively high speed per hour, where an average speed per hour is at least 80 km/h |
| Efficient (fuel consumption) mode | In a traffic jam, performing lane change when allowed, to reach a destination as fast as possible |

In some embodiments, it may be specified that different driving modes correspond to different highest traveling speeds. For example, a plurality of driving modes such as a driving mode A1, a driving mode A2, and a driving mode A3 may be specified, where a highest traveling speed corresponding to the driving mode A1 > a highest traveling speed corresponding to the driving mode A2 > a highest traveling speed corresponding to the driving mode A3.

In some embodiments, some or all of the plurality of vehicles may be in an automated driving state. When a vehicle in the automated driving state travels, the vehicle is autonomously driven with no control of a driver or a little control of the driver. In the automated driving state, a factor or a main factor that restricts a traveling status of a vehicle is a driving mode used by the vehicle.

In some embodiments, some or all of the plurality of vehicles may be in a semi-automated driving state. When a vehicle in the semi-automated driving state travels, the vehicle needs to be moderately controlled by a driver. In the semi-automated driving state, a driver affects a traveling status of a vehicle within regulation ranges of parameters corresponding to a driving mode used by the vehicle. For example, if a highest traveling speed corresponding to a driving mode used by a vehicle B1 is 80 km/h, the vehicle B1 travels at a speed within 0 to 80 km/h under manipulation of a driver, where the speed does not exceed 80 km/h. That is, in the semi-automated driving state, the traveling status of the vehicle is manipulated by the driver and restricted by the used driving mode.

In some embodiments, some or all of the plurality of vehicles may be in a manual driving state. When a vehicle in the manual driving state travels, the vehicle needs to be highly controlled by a driver or completely controlled by the driver. In the manual driving state, a traveling policy of a vehicle is also restricted by a driving mode used by the vehicle. For example, if a highest traveling speed corresponding to a driving mode used by a vehicle B2 is 80 km/h, the vehicle travels at a speed within 0 to 80 km/h under manipulation of a driver, where the speed does not exceed 80 km/h. That is, in the manual driving state, a traveling status of the vehicle is manipulated by the driver and restricted by the used driving mode.

In some embodiments, a vehicle may report a driving mode adjustment request to the vehicle regulation device, to trigger the vehicle regulation device to perform the method shown in FIG. 5. The vehicle that reports the driving mode adjustment request to the vehicle regulation device may be referred to as the first vehicle. In an example in which the first vehicle is the vehicle 100 shown in FIG. 1, it may be specified that a highest traveling speed of a driving mode of the vehicle 100 is relatively high, for example, the driving mode is a sports mode; and a traveling speed of a surrounding vehicle (for example, the vehicle 120, the vehicle 121, and the vehicle 122) of the vehicle 100 is relatively low. The vehicle 100 may send a driving mode adjustment request to the vehicle regulation device.

In an illustrative example, if finding that the traveling speed of the surrounding vehicle is relatively low, a driver of the vehicle 100 may enter a command by using the display 1041 or the microphone. The command may instruct the vehicle 100 to send the driving mode adjustment request to the vehicle regulation device.

In an illustrative example, the sensor system 108 of the vehicle 100 detects the traveling speed of the surrounding vehicle of the vehicle 100, to infer a driving mode. For example, if a traveling speed of a vehicle is relatively low, it may be inferred that the vehicle uses a driving mode with a relatively low highest traveling speed. If the inferred driving mode is inconsistent with that of the vehicle 100, the vehicle 100 may be triggered to send the driving mode adjustment request to the vehicle regulation device.

In an illustrative example, when or after receiving the driving mode adjustment request reported by the vehicle 100, the vehicle regulation device may obtain currently used driving modes of the vehicle 100 and the surrounding vehicle of the vehicle 100. In an example, a vehicle may report a driving mode of the vehicle to the vehicle regulation device. For example, whenever a driving mode of the vehicle changes, the vehicle may report a changed driving mode (namely, a currently used driving mode) to the vehicle regulation device. The vehicle regulation device may update, based on a latest received currently used driving mode, a currently used driving mode stored in the vehicle regulation device. In an example, the vehicle regulation device may send a driving mode request to a vehicle, and the vehicle may feed back a currently used driving mode to the vehicle regulation device in response to the driving mode request. If a currently used driving mode of the vehicle 100 is inconsistent with a currently used driving mode of the surrounding vehicle of the vehicle 100, steps shown in FIG. 5 may be performed.

The driving mode adjustment request may include a vehicle identifier of the vehicle 100 and/or a location of the vehicle 100. When the driving mode adjustment request includes only the vehicle identifier, the vehicle regulation device may obtain the location of the vehicle 100 based on the vehicle identifier of the vehicle 100. For details, refer to the foregoing description of the embodiment shown in FIG. 1. When or after obtaining the location of the vehicle 100, the vehicle adjustment apparatus may determine the surrounding vehicle of the vehicle 100.

In some embodiments, the vehicle regulation device may monitor a currently used driving mode of a vehicle. For example, the vehicle regulation device may send a driving mode request to the vehicle, and the vehicle feeds back the currently used driving mode to the vehicle regulation device in response to the driving mode request. For another example, whenever a driving mode of the vehicle changes, the vehicle may report a changed driving mode (namely, a currently used driving mode) to the vehicle regulation device. The vehicle regulation device may further monitor a location of each vehicle. For example, the vehicle may obtain a location of the vehicle by using a positioning component of the vehicle, and report the location of the vehicle to the vehicle regulation device. For another example, the vehicle may report a vehicle identifier (for example, a VIN) of the vehicle to the vehicle regulation device, and broadcast the vehicle identifier of the vehicle to drive test sensors on both sides of a road on which the vehicle is located. The drive test sensor may detect the location of each vehicle, and report the location of each vehicle to the vehicle regulation device. For details, refer to the foregoing description of the embodiment shown in FIG. 1. Details are not described herein again.

When finding that a currently used driving mode of the first vehicle is inconsistent with a currently used driving mode of the surrounding vehicle of the first vehicle, the vehicle regulation device may perform the steps shown in FIG. 5.

As shown in FIG. 5, the method includes the following steps.

Step 500: Obtain a currently used driving mode of a first vehicle on a target road and a currently used driving mode of a second vehicle on the target road.

The second vehicle is a surrounding vehicle of the first vehicle. For details, refer to the foregoing description. Details are not described herein again. For obtaining the currently used driving mode of the first vehicle and the currently used driving mode of the second vehicle, refer to the foregoing description. Details are not described herein again.

Step 502: When the currently used driving mode of the first vehicle is different from the currently used driving mode of the second vehicle, determine a driving mode adjustment policy based on supported driving modes of the first vehicle and supported driving modes of the second vehicle.

In some embodiments, the vehicle regulation device may receive the supported driving modes of the first vehicle that are sent by the first vehicle. In an example, the supported driving modes of the first vehicle may be driving modes determined by the first vehicle based on traveling information of the first vehicle. The vehicle regulation device may also receive the supported driving modes of the first vehicle that are sent by the first vehicle. The supported driving modes of the second vehicle may be driving modes determined by the second vehicle based on traveling information of the second vehicle.

In some embodiments, the vehicle regulation device may obtain traveling information of the first vehicle and traveling information of the second vehicle; and determine the supported driving modes of the first vehicle based on the traveling information of the first vehicle, and determine the supported driving modes of the second vehicle based on the traveling information of the second vehicle.

In this embodiment of this application, if no special description is provided, traveling information of a vehicle is current traveling information of the vehicle, that is, traveling information latest obtained by the vehicle adjustment device.

In some embodiments, the traveling information may include driver information of a vehicle driver. The driver information may include a driving age, historical violation information, a gender, or the like of the driver. For details, refer to the foregoing description of the embodiment shown in FIG. 2.

In some embodiments, the traveling information may include passenger information. The passenger information may include a passenger quantity, a passenger age, or the like. For details, refer to the foregoing description of the embodiment shown in FIG. 2.

In some embodiments, the traveling information may include a vehicle performance parameter. The vehicle performance parameter may include a vehicle identifier, mileage, or the like. For details, refer to the foregoing description of the embodiment shown in FIG. 2.

In some embodiments, the traveling information may include a travel requirement. For a specific travel requirement, refer to the foregoing description of the embodiment shown in FIG. 2.

In some embodiments, the traveling information may include a vehicle driving automation level. For a specific vehicle driving automation level, refer to the foregoing description of the embodiment shown in FIG. 2.

In some embodiments, the traveling information may specifically include a currently used driving mode. Each vehicle may use one driving mode, and travel in the used driving mode. Each vehicle may report the driving mode of the vehicle to the vehicle regulation device as traveling information.

In some embodiments, the traveling information may include a combination of at least two of driver information, passenger information, a vehicle performance parameter, a travel requirement, a vehicle driving automation level, a driving mode, and the like.

In some embodiments, the vehicle regulation device may determine one or more usable or suitable driving modes of a vehicle based on traveling information of the vehicle. The one or more usable or suitable driving modes of the vehicle constitute supported driving modes of the vehicle.

As described above, different driving modes correspond to different traveling states or states that should be reached. Traveling information of a vehicle may reflect or indicate a requirement of the vehicle for a traveling status. Therefore, a usable or suitable driving mode of the vehicle can be determined based on the traveling information of the vehicle.

Next, an example description is provided for determining a usable or suitable driving mode of a vehicle based on traveling information of the vehicle.

In an illustrative example, the traveling information of the first vehicle includes driver information of the first vehicle, and the traveling information of the second vehicle includes driver information of the second vehicle; the determining the supported driving modes of the first vehicle based on the traveling information of the first vehicle includes: determining a first manipulation capability level corresponding to the driver information of the first vehicle from a plurality of first preset manipulation capability levels; and determining driving modes corresponding to the first manipulation capability level from a plurality of first preset driving modes as the supported driving modes of the first vehicle; and the determining the supported driving modes of the second vehicle based on the traveling information of the second vehicle includes: determining a second manipulation capability level corresponding to the driver information of the second vehicle from a plurality of second preset manipulation capability levels; and determining driving modes corresponding to the second manipulation capability level from a plurality of second preset driving modes as the supported driving modes of the second vehicle.

It should be noted that the plurality of first preset manipulation capability levels may be the same as or may be different from the plurality of second preset manipulation capability levels. The plurality of first preset driving modes may be the same as or may be different from the plurality of second preset driving modes.

It is easy to understand that driver information such as a driving age or a violation rate, or even a gender of a driver may reflect or indicate a vehicle manipulation capability of the driver. A longer driving age, a lower violation rate, or the like of a driver may reflect or indicate a stronger vehicle manipulation capability of the driver.

For any vehicle, a plurality of manipulation capability levels may be preset. Different manipulation capability levels correspond to different driver information. Specifically, driver information such as a longer driving age or a lower violation rate corresponds to a higher manipulation capability level. By using the plurality of preset manipulation capability levels, the vehicle regulation device may determine a manipulation capability level of a driver of any vehicle based on driver information of the vehicle, and may further determine one or more usable or suitable driving modes of the vehicle, that is, determine supported driving modes of the vehicle.

It is easy to understand that different driving modes require different manipulation capabilities. For example, only a driver at a relatively high manipulation capability level is suitable to manipulate a vehicle that uses the efficient (fuel consumption) mode. For the comfortable mode, a relatively low manipulation capability level is required. It is also easy to understand that a driver suitable to manipulate a vehicle that uses the efficient (fuel consumption) mode usually can also manipulate a vehicle that uses the comfortable mode. That is, a higher manipulation capability level indicates more suitable driving modes, and suitable driving modes of a relatively high manipulation capability level include a suitable driving mode of a relatively low manipulation capability level. In an example, different manipulation capability levels may be associated with different driving mode sets, different driving mode sets include different quantities of elements, and each element is one driving mode. A driving mode set associated with a high manipulation capability level includes a driving mode set associated with a low manipulation capability level.

In an illustrative example, the traveling information of the first vehicle includes passenger information of the first vehicle, and the traveling information of the second vehicle includes passenger information of the second vehicle; the determining the supported driving modes of the first vehicle based on the traveling information of the first vehicle includes: determining a first comfort requirement level corresponding to the passenger information of the first vehicle from a plurality of first preset comfort requirement levels; and determining driving modes corresponding to the first comfort requirement level from a plurality of first preset driving modes as the supported driving modes of the first vehicle; and the determining the supported driving modes of the second vehicle based on the traveling information of the second vehicle includes: determining a second comfort requirement level corresponding to the passenger information of the second vehicle from a plurality of second preset comfort requirement levels; and determining driving modes corresponding to the second comfort requirement level from a plurality of second preset driving modes as the supported driving modes of the second vehicle.

It should be noted that the plurality of first preset comfort requirement levels may be the same as or may be different from the plurality of second preset comfort requirement levels. The plurality of first preset driving modes may be the same as or may be different from the plurality of second preset driving modes.

It is easy to understand that if there is a relatively large quantity of passengers in a vehicle, or there is an old person in passengers or a young child or even a baby in passengers, the vehicle needs to smoothly start, travel, decelerate, or the like, that is, have a relatively high comfort requirement level.

For any vehicle, a plurality of comfort requirement levels may be preset. Different comfort requirement levels correspond to different passenger information. By using the plurality of preset comfort requirement levels, the vehicle regulation device may determine a comfort requirement level of any vehicle based on passenger information of the vehicle, and may further determine one or more usable or suitable driving modes of the vehicle, that is, determine supported driving modes of the vehicle.

It is easy to understand that a lower comfort requirement level of a vehicle indicates more usable or suitable driving modes of the vehicle, and the usable or suitable driving modes may include a usable or suitable driving mode of a vehicle at a higher comfort requirement level. In an example, different comfort requirement levels may be associated with different driving mode sets, different driving mode sets include different quantities of elements, and each element is one driving mode. A driving mode set associated with a low comfort requirement level includes a driving mode set associated with a high comfort requirement level.

In an illustrative example, the traveling information of the first vehicle includes a vehicle performance parameter of the first vehicle, and the traveling information of the second vehicle includes a vehicle performance parameter of the second vehicle; the determining the supported driving modes of the first vehicle based on the traveling information of the first vehicle includes: determining a first performance level corresponding to the vehicle performance parameter of the first vehicle from a plurality of first preset performance levels; and determining driving modes corresponding to the first performance level from a plurality of first preset driving modes as the supported driving modes of the first vehicle; and the determining the supported driving modes of the second vehicle based on the traveling information of the second vehicle includes: determining a second performance level corresponding to the vehicle performance parameter of the second vehicle from a plurality of second preset performance levels; and determining driving modes corresponding to the second performance level from a plurality of second preset driving modes as the supported driving modes of the second vehicle.

It should be noted that the plurality of first preset performance levels may be the same as or may be different from the plurality of second preset performance levels. The plurality of first preset driving modes may be the same as or may be different from the plurality of second preset driving modes.

The vehicle performance parameter may include a parameter, such as power. Alternatively, the vehicle performance parameter may include an identifier of a vehicle, and the vehicle regulation device may obtain the vehicle performance parameter based on the identifier of the vehicle. The vehicle performance parameter may alternatively include information, such as mileage. Therefore, performance of the vehicle can be determined based on the vehicle performance parameter.

For any vehicle, a plurality of performance levels may be preset. Different performance levels correspond to different vehicle performance parameters. By using the plurality of preset performance levels, the vehicle regulation device may determine a performance level of a vehicle based on a vehicle performance parameter of the vehicle. Usually, larger power, less mileage, or the like indicates a higher performance level of the vehicle.

It is easy to understand that a higher performance level of a vehicle indicates more usable or suitable driving modes, and the usable or suitable driving modes include a usable or suitable driving mode of a vehicle at a low performance level. In an example, different manipulation capability levels may be associated with different driving mode sets, different driving mode sets include different quantities of elements, and each element is one driving mode. A driving mode set associated with a high performance level includes a driving mode set associated with a low performance level.

In an illustrative example, a usable or suitable driving mode of a vehicle may be alternatively determined based on a travel requirement in traveling information of the vehicle. Usually, a vehicle having a lower travel requirement (for example, having relatively generous time without being in a hurry) has a lower vehicle speed requirement and does not need to keep at a vehicle speed, and therefore has more usable or suitable driving modes, including a usable or suitable driving mode of a vehicle with a higher travel requirement. In an example, a vehicle speed requirement may be determined based on the travel requirement. In addition, different vehicle speed requirements may be associated with different driving mode sets, different driving mode sets include different quantities of elements, and each element is one driving mode. A driving mode set associated with a low vehicle speed requirement includes a driving mode set associated with a high vehicle speed requirement, so that a set of supportable driving modes of a vehicle can be determined based on a travel requirement of the vehicle.

In an illustrative example, a usable or suitable driving mode of a vehicle may be alternatively determined based on a vehicle driving automation level in traveling information of the vehicle. Usually, a vehicle at a higher vehicle driving automation level has more usable or suitable driving modes, including a usable or suitable driving mode of a vehicle at a lower vehicle driving automation level. In an example, different automation levels may be associated with different driving mode sets, different driving mode sets include different quantities of elements, and each element is one driving mode. A driving mode set associated with a high automation level includes a driving mode set associated with a low automation level.

In an illustrative example, the traveling information may include a combination of any two or more of a currently used driving mode, driver information, passenger information, a vehicle performance parameter, a travel requirement, a vehicle driving automation level, and the like. A usable or suitable driving mode of the vehicle may be determined based on a combination of at least one of the driver information, the passenger information, the vehicle performance parameter, the travel requirement, the vehicle driving automation level, and the like. When the traveling information may include the currently used driving mode, if the usable or suitable driving mode that is of the vehicle and that is determined based on the combination of the at least one of the driver information, the passenger information, the vehicle performance parameter, the travel requirement, the vehicle driving automation level, and the like does not include the currently used driving mode of the vehicle, the currently used driving mode of the vehicle may be used as a usable or suitable driving mode of the vehicle, that is, the currently used driving mode of the vehicle belongs to supported driving modes of the vehicle.

In an example, a driving category corresponding to a vehicle may be determined based on traveling information such as a vehicle driving automation level, driver information, passenger information, a vehicle performance parameter, and a travel requirement. For example, a correspondence between the driving category and the traveling information including the vehicle driving automation level, the driver information, the passenger information, the vehicle performance parameter, and the travel requirement may be shown in Table 2.

**Table 2**

| Driving category | Traveling information | | | | |
|---|---|---|---|---|---|
| | Automation level | Driver information | Passenger information | Vehicle performance parameter | Travel requirement |
| Category 1 | Automated driving | A driving age is at least five years | There is no old person or infant in the vehicle | Mileage is less than 50,000 kilometers, a used age of the vehicle is less than five years, and power is at least 3.5 T | An average speed is not lower than 60 km/h |
| Category 2 | Semi-automated driving | A driving age is at least two years | There is an old person or infant in the vehicle | Mileage is greater than 50,000 kilometers or a used age of the vehicle is greater than five years, and power is 2.0 T to 3.5 T | An average speed is not lower than 40 km/h |
| Category 3 | Manual driving | A driving age is at most half a year | There are an old person and infant in the vehicle | Mileage is greater than 50,000 kilometers, a used age of the vehicle is greater than five years, and power is at most 2.0 T | Not in a hurry |

For example, a driving mode corresponding to the category 1 may include the comfortable mode, the smooth (energy saving) mode, the sports mode, and the efficient (fuel consumption) mode. That is, if the vehicle corresponds to the category 1, a set of supportable driving modes of the vehicle may include the comfortable mode, the smooth (energy saving) mode, the sports mode, and the efficient (fuel consumption) mode. A driving mode corresponding to the category 2 may include the comfortable mode, the smooth (energy saving) mode, and the sports mode. That is, if the vehicle corresponds to the category 2, supported driving modes of the vehicle may include the comfortable mode and the smooth (energy saving) mode. A driving mode corresponding to the category 3 may include the comfortable mode and the smooth (energy saving) mode. That is, if the vehicle corresponds to the category 3, supported driving modes of the vehicle may include the comfortable mode and the smooth (energy saving) mode.

For example, a driving mode corresponding to the category 1 includes the driving mode A1, the driving mode A2, and the driving mode A3. A driving mode suitable for the category 2 includes the driving mode A2 and the driving mode A3. A driving mode suitable for the category 3 includes the driving mode A3.

In these embodiments, supported driving modes of a vehicle may be determined in the foregoing manners. The vehicle regulation device may determine the driving mode adjustment policy based on the supported driving modes of the first vehicle and the second vehicle, where the driving mode adjustment policy is used to adjust the driving mode of the first vehicle or the second vehicle.

The vehicle regulation device determines whether the currently used driving mode of the first vehicle belongs to the supported driving modes of the second vehicle. If the currently used driving mode of the first vehicle belongs to the supported driving modes of the second vehicle, the driving mode adjustment policy is adjusting the currently used driving mode of the second vehicle to the currently used driving mode of the first vehicle.

For example, the vehicle adjustment device sends the driving mode adjustment policy to the second vehicle, to request the second vehicle to adjust the currently used driving mode of the second vehicle to the currently used driving mode of the first vehicle according to the driving mode adjustment policy, where the driving mode adjustment policy includes the currently used driving mode of the first vehicle.

For example, the vehicle regulation device adjusts the currently used driving mode of the first vehicle to the currently used driving mode of the second vehicle according to the driving mode adjustment policy.

In some embodiments, the vehicle regulation device may determine whether the currently used driving mode of the second vehicle belongs to the supported driving modes of the first vehicle. If the currently used driving mode of the second vehicle belongs to the supported driving modes of the first vehicle, the driving mode adjustment policy is adjusting the currently used driving mode of the first vehicle to the currently used driving mode of the second vehicle.

For example, the vehicle adjustment device sends the driving mode adjustment policy to the first vehicle, to request the first vehicle to adjust the currently used driving mode of the first vehicle to the currently used driving mode of the second vehicle according to the driving mode adjustment policy, where the driving mode adjustment policy includes the currently used driving mode of the second vehicle.

For example, the vehicle regulation device adjusts the currently used driving mode of the first vehicle to the currently used driving mode of the second vehicle according to the driving mode adjustment policy.

In some embodiments, the vehicle regulation device may determine whether the supported driving modes of the second vehicle include or are equal to the supported driving modes of the first vehicle.

In some embodiments, if the supported driving modes of the second vehicle include or are equal to the supported driving modes of the first vehicle, adjusting the currently used driving mode of the second vehicle may be determined as the adjustment policy, that is, an adjustment mode may be adjusting the currently used driving mode of the surrounding vehicle of the first vehicle. For example, in the transport system shown in FIG. 1, it may be specified that the first vehicle is the vehicle 100, and the second vehicle includes the vehicle 120, the vehicle 121, and the vehicle 122. It may be specified that elements of supported driving modes of the vehicle 100 are the comfortable mode, the smooth (energy saving) mode, and the sports mode, and elements of supported driving modes of each of the vehicle 120, the vehicle 121, and the vehicle 122 are the comfortable mode, the smooth (energy saving) mode, the sports mode, and the efficient (fuel consumption) mode. That is, the supported driving modes of each of the vehicle 120, the vehicle 121, and the vehicle 122 include or are equal to the supported driving modes of the vehicle 100. Therefore, the adjustment policy is adjusting currently used driving modes of the vehicle 120, the vehicle 121, and the vehicle 122.

If the traveling information of the first vehicle includes the currently used driving mode of the first vehicle, adjusting the currently used driving mode of the second vehicle based on the currently used driving mode of the first vehicle may be determined as the adjustment policy, that is, an adjustment mode may be adjusting the currently used driving mode of the surrounding vehicle of the first vehicle based on the currently used driving mode of the first vehicle. Specifically, a driving mode that matches the currently used driving mode of the first vehicle may be determined from the supported driving modes of the second vehicle based on the currently used driving mode of the first vehicle. The adjustment policy may include adjusting the currently used driving mode of the second vehicle to the driving mode that matches the currently used driving mode of the first vehicle. The driving mode that matches the currently used driving mode of the first vehicle may be referred to as a target driving mode.

In an illustrative example, the driving mode that matches the currently used driving mode of the first vehicle may be a driving mode that is the same as the currently used driving mode of the first vehicle. For example, still in the transport system shown in FIG. 1, if a currently used driving mode of the vehicle 100 is the sports mode, a driving mode that matches the sports mode is also the sports mode.

In an illustrative example, the driving mode that matches the currently used driving mode of the first vehicle may be a driving mode with a highest traveling speed higher than a highest traveling speed of the currently used driving mode of the first vehicle. For example, still in the transport system shown in FIG. 1, if a currently used driving mode of the vehicle 100 is the sports mode, a driving mode that matches the sports mode may be the efficient (fuel consumption) mode.

In an illustrative example, the second vehicle may include at least two vehicles. The vehicle regulation device may obtain currently used driving modes of the at least two vehicles. If currently used driving modes of one or more of the at least two vehicles do not match the currently used driving mode of the first vehicle, the adjustment policy may be adjusting the currently used driving modes of the one or more vehicles. For example, still in the transport system shown in FIG. 1, it may be specified that the first vehicle is the vehicle 100, and the second vehicle includes the vehicle 120, the vehicle 121, and the vehicle 122. It may be specified that supported driving modes of the vehicle 100 include the comfortable mode, the smooth (energy saving) mode, and the sports mode, and elements of supported driving modes of each of the vehicle 120, the vehicle 121, and the vehicle 122 are the comfortable mode, the smooth (energy saving) mode, the sports mode, and the efficient (fuel consumption) mode. That is, the supported driving modes of each of the vehicle 120, the vehicle 121, and the vehicle 122 include or are equal to the supported driving modes of the vehicle 100. Therefore, the adjustment policy is adjusting currently used driving modes of the vehicle 120, the vehicle 121, and the vehicle 122. It may be further specified that a currently used driving mode of the vehicle 100 is the sports mode, and currently used driving modes of the vehicle 121 and the vehicle 122 are the smooth (energy saving) mode, a currently used driving mode of the vehicle 120 is the sports mode or the efficient (fuel consumption) mode. Therefore, the adjustment policy is adjusting the driving modes of the vehicle 121 and the vehicle 122. More specifically, the adjustment policy is adjusting the driving modes of the vehicle 121 and the vehicle 122 to the sports mode or the efficient (fuel consumption) mode.

In some embodiments, the second vehicle includes at least two vehicles. If supported driving modes of each of one or more of the at least two vehicles include or are equal to the supported driving modes of the first vehicle, the adjustment policy may be adjusting currently used driving modes of the one or more vehicles. For example, in the transport system shown in FIG. 1, it may be specified that the first vehicle is the vehicle 100, and the second vehicle includes the vehicle 120, the vehicle 121, and the vehicle 122. It may be specified that supported driving modes of the vehicle 100 include the comfortable mode, the smooth (energy saving) mode, and the sports mode, supported driving modes of each of the vehicle 120 and the vehicle 121 include the comfortable mode, the smooth (energy saving) mode, the sports mode, and the efficient (fuel consumption) mode, and supported driving modes of the vehicle 122 include the comfortable mode and the smooth (energy saving) mode. That is, the supported driving modes of each of the vehicle 120 and the vehicle 121 include or are equal to the supported driving modes of the vehicle 100, and the supported driving modes of the vehicle 122 do not completely include and are not equal to the supported driving modes of the vehicle 100. Therefore, the adjustment policy is adjusting currently used driving modes of the vehicle 120 and the vehicle 121.

For these embodiments, further refer to the foregoing embodiments for implementation. Details are not described herein again.

In some embodiments, if the supported driving modes of the first vehicle include or are equal to the supported driving modes of the second vehicle, the adjustment policy may be adjusting the currently used driving mode of the first vehicle. For details, refer to the foregoing embodiments for implementation. Details are not described herein.

In the foregoing embodiment, the adjustment policy may be determined by using the supported driving modes of the first vehicle and the second vehicle.

In some embodiments, the adjustment policy may be determined by using the currently used driving mode of the first vehicle and the currently used driving mode of the second vehicle. In these embodiments, traveling information of a vehicle includes a currently used driving mode of the vehicle. When the currently used driving mode of the first vehicle is different from the currently used driving mode of the second vehicle, the adjustment policy may be adjusting the currently used driving mode of the second vehicle, or may be adjusting the currently used driving mode of the first vehicle. In an illustrative example, it may be specified that a highest traveling speed of the currently used driving mode of the first vehicle is greater than a highest traveling speed of the currently used driving mode of the second vehicle. Therefore, adjusting the currently used driving mode of the second vehicle may be used as the adjustment policy. In an example, the adjustment policy may be specifically adjusting the currently used driving mode of the second vehicle to a driving mode with a highest traveling speed greater than or equal to the highest traveling speed of the currently used driving mode of the first vehicle, thereby improving road utilization and traffic efficiency.

The driving mode adjustment policy may be determined in the foregoing manners. The adjustment policy may be used to adjust a driving mode of a corresponding vehicle. Details are as follows:

In some embodiments, the vehicle regulation device may send an adjustment request to a related vehicle in the adjustment policy based on the adjustment policy, to request the related vehicle to adjust a driving mode. When or after receiving the adjustment request, the related vehicle may display or prompt, by using a voice, the adjustment request. A manipulator of the related vehicle may agree to or refuse the adjustment request by using a touch operation or a voice command.

In an illustrative example, the adjustment request may include a target driving mode, to request the related vehicle to adjust the driving mode to the target driving mode. When or after receiving the adjustment request, the related vehicle may display or prompt, by using a voice, whether to adjust the driving mode to the target driving mode, so that the manipulator of the related vehicle performs a driving operation of adjusting to the target driving mode, or does not perform a driving operation of adjusting to the target driving mode. For a vehicle in an automated driving state, a related person in the vehicle may agree or refuse to adjust a driving mode to a target driving mode by using a touch operation or a voice command.

In some embodiments, the vehicle regulation device may send an adjustment command to a related vehicle in the adjustment policy based on the adjustment policy. When or after the related vehicle receives the adjustment command, a computing system of the related vehicle may execute the adjustment command to adjust a currently used driving mode of the related vehicle.

In an illustrative example, the adjustment command may include a target driving mode. The computing system of the related vehicle may execute the adjustment command to adjust the currently used driving mode of the related vehicle to the target driving mode.

In an illustrative example, before executing the adjustment command, the computing system displays or prompts, by using a voice, information for determining whether to adjust the driving mode. If a related person determines to adjust the driving mode, the computing system executes the adjustment command. If a related person refuses to adjust the driving mode, the computing system refuses to execute the adjustment command.

According to the vehicle regulation method provided in this embodiment of this application, when the currently used driving mode of the first vehicle is different from the currently used driving mode of the surrounding vehicle of the first vehicle, the driving mode adjustment policy for the driving mode of the first vehicle or the surrounding vehicle of the first vehicle may be determined based on the supported driving modes of the first vehicle and the supported driving modes of the surrounding vehicle of the first vehicle. Therefore, when a driving mode of a vehicle is adjusted, traveling information of another vehicle is considered, so that consistency of driving modes of a plurality of vehicles traveling on a same road can be improved, thereby improving driving safety and road utilization.

FIG. 6 is a flowchart of another vehicle regulation method according to an embodiment of this application. The method may be performed by a vehicle regulation device. The vehicle regulation device may be the management center 200 shown in FIG. 1, may be the computing system of each of the one or more of the plurality of vehicles shown in FIG. 3, may be the computing system of each of the one or more of the plurality of vehicles shown in FIG. 4, or may be a mobile terminal.

A lane adjustment policy of a plurality of vehicles traveling on a road having a plurality of lanes may be determined by using the method shown in FIG. 6. The plurality of vehicles include a first vehicle and a surrounding vehicle of the first vehicle. The driving mode adjustment policy may be used to adjust a lane of the first vehicle or the surrounding vehicle of the first vehicle.

For the first vehicle and the surrounding vehicle of the first vehicle, refer to the foregoing description of the embodiment shown in FIG. 5. Details are not described herein again.

In some embodiments, a vehicle may report a lane adjustment request to the vehicle regulation device, to trigger the vehicle regulation device to perform the method shown in FIG. 6.

In an illustrative example, when or after receiving a lane adjustment request reported by the first vehicle, the vehicle regulation device may obtain currently used driving modes of the first vehicle and the surrounding vehicle of the first vehicle. For obtaining, by the vehicle regulation device, a currently used driving mode of a vehicle, refer to the foregoing description of the embodiment shown in FIG. 5. Details are not described herein again. If a currently used driving mode of the first vehicle is inconsistent with a currently used driving mode of the surrounding vehicle of the first vehicle, steps shown in FIG. 6 may be performed.

In some embodiments, the vehicle regulation device may monitor a currently used driving mode of a vehicle. For details, refer to the foregoing description of the embodiment shown in FIG. 5. When finding that the currently used driving mode of the first vehicle is inconsistent with the currently used driving mode of the surrounding vehicle of the first vehicle, the vehicle regulation device may perform the steps shown in the figure.

Refer to FIG. 6. The method includes the following steps.

Step 600: Obtain a currently used driving mode of a first vehicle on a target road and a currently used driving mode of a second vehicle on the target road, where the first vehicle and the second vehicle are located on a first lane.

The second vehicle is a surrounding vehicle of the first vehicle. For details, refer to the foregoing description. Details are not described herein again.

In some embodiments, a vehicle may monitor a lane on which the vehicle is located, for example, obtain, by using an out-of-vehicle camera, an image of a road segment on which the vehicle is located, and a computing system of the vehicle may determine, based on the image of the road segment on which the vehicle is located, that the vehicle is located on an n^{th} lane counted from a left side (right side). The vehicle may report the lane determined by the computing system of the vehicle to the vehicle regulation device.

In some embodiments, each vehicle may report a vehicle identifier (for example, a VIN) of the vehicle to the vehicle regulation device, and broadcast the vehicle identifier to drive test sensors on both sides of a road on which the vehicle is located. The drive test sensor may detect a lane quantity and location of a surrounding road segment, and may further detect a location of each vehicle, to determine a lane on which each vehicle is located. The drive test sensor may report the lane on which each vehicle is located to the vehicle regulation device.

For the first vehicle and the second vehicle, refer to the foregoing description of step 500 for implementation. Details are not described herein again.

In some embodiments, a vehicle may report a lane adjustment request to the vehicle regulation device, to trigger the vehicle regulation device to perform the method shown in FIG. 6. The vehicle that reports the lane adjustment request to the vehicle regulation device may be referred to as the first vehicle. In an example in which the first vehicle is the vehicle 100 shown in FIG. 1, it may be specified that a highest traveling speed of a driving mode of the vehicle 100 is relatively high, for example, the driving mode is a sports mode; and a traveling speed of a surrounding vehicle (for example, the vehicle 120, the vehicle 121, and the vehicle 122) of the vehicle 100 is relatively low. The vehicle 100 may send a lane adjustment request to the vehicle regulation device. For a reporting process of the lane adjustment request, refer to the foregoing description of the reporting process of the driving mode adjustment request. Details are not described herein.

In some embodiments, the vehicle regulation device may monitor a currently used driving mode of a vehicle. For example, the vehicle regulation device may send a driving mode request to the vehicle, and the vehicle feeds back the currently used driving mode to the vehicle regulation device in response to the request. For another example, whenever a driving mode of the vehicle changes, the vehicle may report a changed driving mode (namely, a currently used driving mode) to the vehicle regulation device. The vehicle regulation device may further monitor a location of each vehicle. For example, the vehicle may obtain a location of the vehicle by using a positioning component of the vehicle, and report the location of the vehicle to the vehicle regulation device. For another example, the vehicle may report a vehicle identifier (for example, a VIN) of the vehicle to the vehicle regulation device, and broadcast the vehicle identifier of the vehicle to drive test sensors on both sides of a road on which the vehicle is located. The drive test sensor may detect the location of each vehicle, and report the location of each vehicle to the vehicle regulation device. For details, refer to the foregoing description of the embodiment shown in FIG. 1. Details are not described herein again.

Step 602: When the currently used driving mode of the first vehicle is different from the currently used driving mode of the second vehicle, determine a traveling lane adjustment policy based on supported driving modes of the first vehicle and supported driving modes of the second vehicle.

For a manner of obtaining the supported driving modes of the first vehicle and the supported driving modes of the second vehicle, refer to the foregoing description of step 502 in FIG. 5. Details are not described herein again.

In some embodiments, if the currently used driving mode of the first vehicle belongs to the supported driving modes of the second vehicle, the traveling lane adjustment policy is transferring the second vehicle from the first lane.

For example, the traveling lane adjustment policy is sent to the second vehicle, to request the second vehicle to transfer the second vehicle from the first lane according to the traveling lane adjustment policy.

For example, the vehicle regulation device transfers the second vehicle from the first lane according to the lane adjustment policy.

In some embodiments, if the currently used driving mode of the second vehicle belongs to the supported driving modes of the first vehicle, the traveling lane adjustment policy is transferring the first vehicle from the first lane.

For example, the traveling lane adjustment policy is sent to the first vehicle, to request the first vehicle to transfer the first vehicle from the first lane according to the traveling lane adjustment policy.

For example, the vehicle regulation device transfers the second vehicle from the first lane according to the lane adjustment policy.

In some embodiments, when the second vehicle and the first vehicle are on a same lane, and the second vehicle is in front of the first vehicle (that is, a location of the second vehicle is a location that the first vehicle needs to pass through without changing the lane), a smoothness requirement level of the second vehicle may be determined based on traveling information of the second vehicle, and a smoothness requirement level of the first vehicle may be determined based on the traveling information of the first vehicle, so that the lane adjustment policy can be determined based on the smoothness requirement level of the second vehicle and the smoothness requirement level of the first vehicle.

In an illustrative example, the adjustment policy may be specifically adjusting a lane of a vehicle with a relatively low smoothness requirement level. In an example, if the smoothness requirement level of the second vehicle is lower than the smoothness requirement level of the first vehicle, adjusting a lane of the second vehicle is determined as the adjustment policy. The adjustment policy may be specifically transferring the second vehicle from a lane on which the first vehicle is located.

In another example, if the smoothness requirement level of the second vehicle is higher than or equal to the smoothness requirement level of the first vehicle, adjusting a lane of the first vehicle is determined as the adjustment policy. The adjustment policy may be specifically transferring the first vehicle from a lane on which the second vehicle is located.

In an illustrative example, the traveling information includes driver information. A manipulation capability level of a driver of a vehicle may be determined based on driver information of the vehicle, and a smoothness requirement level of the vehicle may be determined based on the manipulation capability level of the driver of the vehicle. It is easy to understand that driver information such as a driving age or a violation rate, or even a gender of a driver may reflect or indicate a vehicle manipulation capability of the driver. A longer driving age, a lower violation rate, or the like of a driver may reflect or indicate a stronger vehicle manipulation capability of the driver.

A plurality of manipulation capability levels may be preset based on experience or experiments. Different manipulation capability levels correspond to different driver information. Specifically, driver information such as a longer driving age or a lower violation rate corresponds to a higher manipulation capability level. By using the plurality of preset manipulation capability levels, the vehicle regulation device may determine a manipulation capability level of a driver of any vehicle based on driver information of the vehicle. A plurality of smoothness requirement levels may be preset. Different smoothness requirement levels correspond to different manipulation capability levels. It is easy to understand that a driver at a higher manipulation capability level can deal with a more complex vehicle operation, and correspondingly, has a lower smoothness requirement level.

In an illustrative example, the traveling information includes passenger information. A comfort requirement level of a vehicle may be determined based on passenger information of the vehicle, and a smoothness requirement level of the vehicle may be determined based on the comfort requirement level of the vehicle. It is easy to understand that if there is a relatively large quantity of passengers in a vehicle, or there is an old person in passengers or a young child or even a baby in passengers, the vehicle needs to smoothly start, travel, decelerate, or the like, that is, have a relatively high comfort requirement level.

A plurality of comfort requirement levels may be preset. Different comfort requirement levels correspond to different passenger information. By using the plurality of preset comfort requirement levels, the vehicle regulation device may determine a comfort requirement level of any vehicle based on passenger information of the vehicle. A plurality of smoothness requirement levels may be preset. Different smoothness requirement levels correspond to different comfort requirement levels, so that a smoothness requirement level can be determined based on a determined comfort requirement level.

In an illustrative example, the traveling information includes a vehicle performance parameter. Performance of a vehicle may be determined based on a vehicle performance parameter of the vehicle, and a smoothness requirement level of the vehicle may be determined based on the performance of the vehicle. The vehicle performance parameter may alternatively include information, such as mileage. Therefore, the performance of the vehicle can be determined based on the vehicle performance parameter.

A plurality of performance levels may be preset. Different performance levels correspond to different vehicle performance parameters. By using the plurality of preset performance levels, the vehicle regulation device may determine a performance level of a vehicle based on a vehicle performance parameter of the vehicle. Usually, larger power, less mileage, or the like indicates a higher performance level of the vehicle. It is easy to understand that a vehicle with higher performance can perform a more complex traveling operation, and correspondingly, has a lower smoothness requirement level. A plurality of smoothness requirement levels may be preset. Different smoothness requirement levels correspond to different performance levels, so that a smoothness requirement level can be determined based on a determined performance level.

In an illustrative example, the traveling information includes a travel requirement. A smoothness requirement level of a vehicle may be determined based on a travel requirement of the vehicle. Usually, a vehicle having a lower travel requirement (for example, having relatively generous time without being in a hurry) is more suitable to perform a complex driving operation such as lane change. In an example, a vehicle speed requirement may be determined based on the travel requirement. In addition, different vehicle speed requirements are associated with different smoothness requirements, so that a smoothness requirement level of a vehicle can be determined based on a travel requirement of the vehicle.

In an illustrative example, a smoothness requirement level of a vehicle may be alternatively determined based on a vehicle driving automation level in traveling information of the vehicle. Usually, a vehicle at a higher vehicle driving automation level is more suitable to perform a complex traveling operation such as lane change. In an example, different automation levels may be associated with different smoothness requirements, so that a smoothness requirement level of a vehicle can be determined based on an automation level of the vehicle.

In an illustrative example, the traveling information may include a combination of any two or more of a currently used driving mode, driver information, passenger information, a vehicle performance parameter, a travel requirement, a vehicle driving automation level, and the like. A smoothness requirement of the vehicle may be determined based on a combination of at least one of the driver information, the passenger information, the vehicle performance parameter, the travel requirement, the vehicle driving automation level, and the like. During specific implementation, a developer may specify, according to the foregoing described principle, smoothness requirements associated with different traveling information, so that a smoothness requirement of a vehicle can be determined based on traveling information of the vehicle.

In the foregoing embodiments, the smoothness requirement levels of the first vehicle and the second vehicle may be determined, to determine whether the adjustment policy is adjusting the lane of the first vehicle or adjusting the lane of the second vehicle.

In some embodiments, the vehicle regulation device may send an adjustment request to a related vehicle in the adjustment policy based on the adjustment policy, to request the related vehicle to adjust a lane. When or after receiving the adjustment request, the related vehicle may display or prompt, by using a voice, the adjustment request. A manipulator of the related vehicle may agree to or refuse the adjustment request by using a touch operation or a voice command.

In an illustrative example, the adjustment request may include a target lane, to request the related vehicle to adjust the lane to the target lane. For a vehicle in an automated driving state, when or after receiving the adjustment request, the vehicle may display or prompt, by using a voice, request information about whether to adjust the lane to the target driving mode, so that a related person in the vehicle can agree or refuse, by using a touch operation or a voice command, to adjust the lane to the target lane. For a vehicle in a manual driving state or a semi-automated driving state, when or after receiving the adjustment request, the vehicle may display or prompt, by using a voice, information about whether to adjust the lane to the target driving mode, so that a manipulator of the related vehicle performs a driving operation of adjusting to the target lane, or does not perform a driving operation of adjusting to the target lane.

In an example, a vehicle may determine a location relationship between the target lane in the adjustment request and a lane on which the vehicle is currently located. For example, a geodetic coordinate system is used to represent the target lane and the lane on which the vehicle is currently located, to intuitively give a prompt to a driver or intuitively display the target lane.

In some embodiments, the vehicle regulation device may send an adjustment command to a related vehicle in the adjustment policy based on the adjustment policy. When or after the related vehicle receives the adjustment command, a computing system of the related vehicle may execute the adjustment command to adjust a driving mode of the related vehicle.

In an illustrative example, the adjustment command may include a target lane. The computing system of the related vehicle may execute the adjustment command to adjust the lane of the related vehicle to the target lane.

In an illustrative example, before executing the adjustment command, the computing system displays or prompts, by using a voice, information for determining whether to adjust the lane. If a related person determines to adjust the lane, the computing system executes the adjustment command. If a related person refuses to adjust the lane, the computing system refuses to execute the adjustment command.

According to the method provided in this embodiment of this application, when the driving modes of the first vehicle and the second vehicle on the same lane are different, the traveling lane adjustment policy may be determined based on the supported driving modes of the first vehicle and the supported driving modes of the second vehicle, thereby improving lane adjustment efficiency and road utilization.

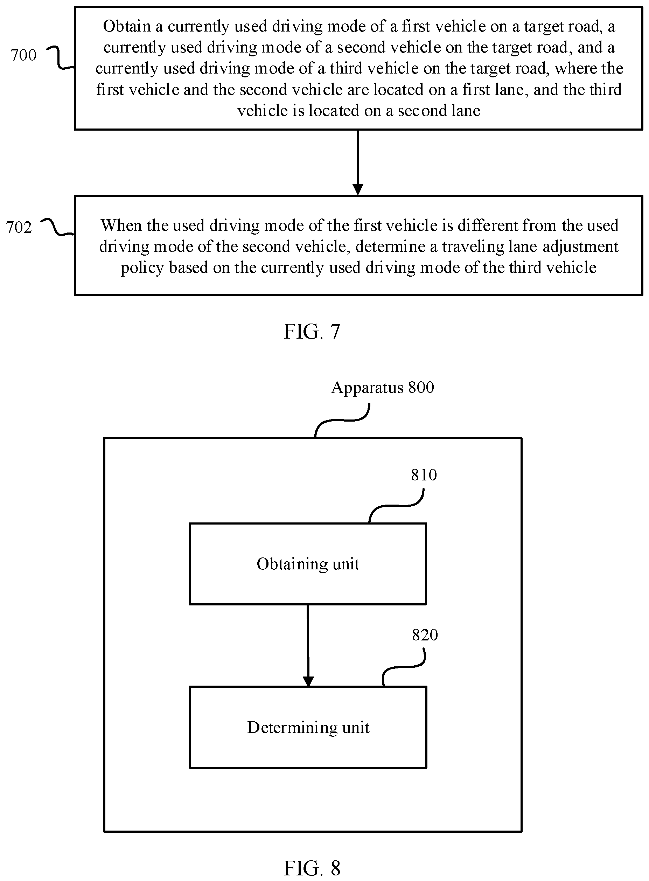

FIG. 7 is a flowchart of still another vehicle regulation method according to an embodiment of this application. The method may be performed by a vehicle regulation device. The vehicle regulation device may be the management center 200 shown in FIG. 1, may be the computing system of each of the one or more of the plurality of vehicles shown in FIG. 3, may be the computing system of each of the one or more of the plurality of vehicles shown in FIG. 4, or may be a mobile terminal.

As shown in FIG. 7, the method includes the following steps.

Step 700: Obtain a currently used driving mode of a first vehicle on a target road, a currently used driving mode of a second vehicle on the target road, and a currently used driving mode of a third vehicle on the target road, where the first vehicle and the second vehicle are located on a first lane, and the third vehicle is located on a second lane.

For manners of obtaining a lane on which each vehicle is located and a currently used driving mode of each vehicle, refer to the foregoing description of the method embodiments shown in FIG. 6. Details are not described herein again.

Step 702: When the used driving mode of the first vehicle is different from the used driving mode of the second vehicle, determine a traveling lane adjustment policy based on the currently used driving mode of the third vehicle.

In some embodiments, if the currently used driving mode of the third vehicle is the same as the used driving mode of the second vehicle, the traveling lane adjustment policy is adjusting a traveling lane of the second vehicle to the second lane. According to the vehicle regulation method provided in this embodiment of this application, a lane adjustment policy may be determined based on traveling information of a plurality of vehicles traveling on a road having a plurality of lanes, to adjust vehicles in a same driving mode to a same lane for traveling, thereby improving driving safety and road utilization.

An embodiment of this application provides a vehicle regulation apparatus 800. The vehicle regulation apparatus 800 may be configured in the management center 200 shown in FIG. 1, may be configured in the computing system of each of the one or more of the plurality of vehicles shown in FIG. 3, may be configured in the computing system of each of the one or more of the plurality of vehicles shown in FIG. 4, or may be configured in a mobile terminal.

The vehicle regulation apparatus 800 may include:
an obtaining unit 810, configured to obtain a currently used driving mode of a first vehicle on a target road and a currently used driving mode of a second vehicle on the target road; and
a determining unit 820, configured to: when the currently used driving mode of the first vehicle is different from the currently used driving mode of the second vehicle, determine a driving mode adjustment policy based on supported driving modes of the first vehicle and supported driving modes of the second vehicle.

According to the vehicle identification apparatus provided in this embodiment of this application, when the currently used driving mode of the first vehicle is different from a currently used driving mode of a surrounding vehicle of the first vehicle, a driving mode adjustment policy for the first vehicle or the surrounding vehicle of the first vehicle may be determined based on the supported driving modes of the first vehicle and supported driving modes of the surrounding vehicle of the first vehicle. Therefore, when a driving mode of a vehicle is adjusted, traveling information of another vehicle is considered, so that consistency of driving modes of a plurality of vehicles traveling on a same road can be improved, thereby improving driving safety and road utilization.

An embodiment of this application provides a vehicle regulation apparatus 900. The vehicle regulation apparatus 900 may be configured in the management center 200 shown in FIG. 1, may be configured in the computing system of each of the one or more of the plurality of vehicles shown in FIG. 3, may be configured in the computing system of each of the one or more of the plurality of vehicles shown in FIG. 4, or may be configured in a mobile terminal.

The vehicle regulation apparatus 900 may include:
an obtaining unit 910, configured to obtain a currently used driving mode of a first vehicle on a target road and a currently used driving mode of a second vehicle on the target road, where the first vehicle and the second vehicle are located on a first lane; and
a determining unit 920, configured to: when the currently used driving mode of the first vehicle is different from the currently used driving mode of the second vehicle, determine a traveling lane adjustment policy based on supported driving modes of the first vehicle and supported driving modes of the second vehicle.

According to the vehicle regulation apparatus provided in this embodiment of this application, when the driving modes of the first vehicle and the second vehicle on the same lane are different, the traveling lane adjustment policy may be determined based on the supported driving modes of the first vehicle and the supported driving modes of the second vehicle, thereby improving lane adjustment efficiency and road utilization.

An embodiment of this application provides a vehicle regulation apparatus 1000. The vehicle regulation apparatus 1000 may be configured in the management center 200 shown in FIG. 1, may be configured in the computing system of each of the one or more of the plurality of vehicles shown in FIG. 3, may be configured in the computing system of each of the one or more of the plurality of vehicles shown in FIG. 4, or may be configured in a mobile terminal.

The vehicle regulation apparatus 1000 may include:
an obtaining unit 1010, configured to obtain a currently used driving mode of a first vehicle on a target road, a currently used driving mode of a second vehicle on the target road, and a currently used driving mode of a third vehicle on the target road, where the first vehicle and the second vehicle are located on a first lane, and the third vehicle is located on a second lane; and
an obtaining unit 1020, configured to: when the used driving mode of the first vehicle is different from the used driving mode of the second vehicle, determine a traveling lane adjustment policy based on the currently used driving mode of the third vehicle.

According to the vehicle regulation apparatus provided in this embodiment of this application, a lane adjustment policy may be determined based on traveling information of a plurality of vehicles traveling on a road having a plurality of lanes, to adjust vehicles in a same driving mode to a same lane for traveling, thereby improving driving safety and road utilization.

The foregoing mainly describes the apparatuses provided in the embodiments of this application from a perspective of a method process. It can be understood that, to implement the foregoing functions, the electronic devices include a corresponding hardware structure and/or software module for performing each of the functions. A person skilled in the art should easily be aware that, in combination with units and algorithm steps of the examples described in the embodiments disclosed in this specification, this application can be implemented by hardware or a combination of hardware and computer software. Whether a specific function is performed by hardware or hardware driven by computer software depends on particular applications and design constraints of the technical solutions.

In the embodiments of this application, function module division may be performed on an electronic device or the like based on the method embodiments shown in FIG. 5, the method embodiments shown in FIG. 6, or the method embodiments shown in FIG. 7. For example, each function module may be obtained through division based on a corresponding function, or two or more functions may be integrated into one processing module. The integrated module may be implemented in a form of hardware, or may be implemented in a form of a software function module. It should be noted that, in this embodiment of this application, division into the modules is an example, and is merely a logical function division. In actual implementation, another division manner may be used.

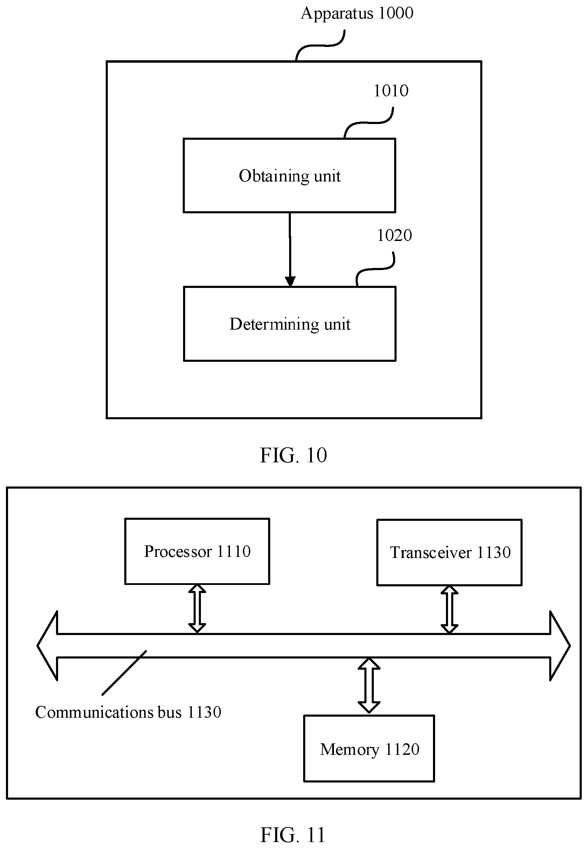

An embodiment of this application provides an electronic device. Referring to FIG. 11, the electronic device includes a processor 1110, a memory 1120, and a transceiver 1130. The memory 1120 is configured to store computer instructions. When the electronic device runs, the processor executes the computer instructions, to enable the electronic device to perform the method shown in FIG. 5. The processor 1110 is configured to obtain a currently used driving mode of a first vehicle on a target road and a currently used driving mode of a second vehicle on the target road. The processor 1110 is further configured to: when the currently used driving mode of the first vehicle is different from the currently used driving mode of the second vehicle, determine a driving mode adjustment policy based on supported driving modes of the first vehicle and supported driving modes of the second vehicle.

In some embodiments, the electronic device further includes a communications bus 1140. The processor 1110 may be connected to the memory 1120 and the transceiver 1130 by using the communications bus 1140, thereby correspondingly controlling the transceiver 1130 based on the computer executable instructions stored in the memory 1120.

Specific implementations of components/devices of the electronic device in this embodiment of this application may be implemented with reference to the method embodiment shown in FIG. 5 above. Details are not described herein again.

Therefore, when the currently used driving mode of the first vehicle is different from a currently used driving mode of a surrounding vehicle of the first vehicle, a driving mode adjustment policy for the first vehicle or the surrounding vehicle of the first vehicle may be determined based on the supported driving modes of the first vehicle and supported driving modes of the surrounding vehicle of the first vehicle. Therefore, when a driving mode of a vehicle is adjusted, traveling information of another vehicle is considered, so that consistency of driving modes of a plurality of vehicles traveling on a same road can be improved, thereby improving driving safety and road utilization.

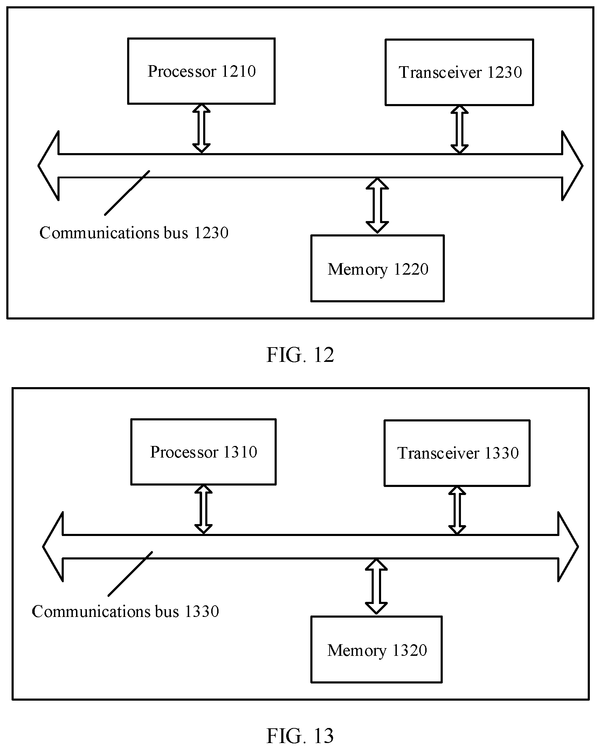

An embodiment of this application provides an electronic device. Referring to FIG. 12, the electronic device includes a processor 1210, a memory 1220, and a transceiver 1230. The memory 1220 is configured to store computer instructions. When the electronic device runs, the processor executes the computer instructions, to enable the electronic device to perform the method shown in FIG. 6. The processor 1210 is configured to obtain a currently used driving mode of a first vehicle on a target road and a currently used driving mode of a second vehicle on the target road, where the first vehicle and the second vehicle are located on a first lane. The processor 1210 is further configured to: when the currently used driving mode of the first vehicle is different from the currently used driving mode of the second vehicle, determine a traveling lane adjustment policy based on supported driving modes of the first vehicle and supported driving modes of the second vehicle.

In some embodiments, the electronic device further includes a communications bus 1240. The processor 1210 may be connected to the memory 1220 and the transceiver 1230 by using the communications bus 1240, thereby correspondingly controlling the transceiver 1230 based on the computer executable instructions stored in the memory 1220.

Specific implementations of components/devices of the electronic device in this embodiment of this application may be implemented with reference to the method embodiment shown in FIG. 6 above. Details are not described herein again.

Therefore, when the driving modes of the first vehicle and the second vehicle on the same lane are different, the traveling lane adjustment policy may be determined based on the supported driving modes of the first vehicle and the supported driving modes of the second vehicle, thereby improving lane adjustment efficiency and road utilization.

An embodiment of this application provides an electronic device. Referring to FIG. 13, the electronic device includes a processor 1310, a memory 1320, and a transceiver 1330. The memory 1320 is configured to store computer instructions. When the electronic device runs, the processor executes the computer instructions, to enable the electronic device to perform the method shown in FIG. 7. The processor 1310 is configured to obtain a currently used driving mode of a first vehicle on a target road, a currently used driving mode of a second vehicle on the target road, and a currently used driving mode of a third vehicle on the target road, where the first vehicle and the second vehicle are located on a first lane, and the third vehicle is located on a second lane. The processor 1310 is configured to: when the used driving mode of the first vehicle is different from the used driving mode of the second vehicle, determine a traveling lane adjustment policy based on the currently used driving mode of the third vehicle.

In some embodiments, the electronic device further includes a communications bus 1340. The processor 1310 may be connected to the memory 1320 and the transceiver 1330 by using the communications bus 1340, thereby correspondingly controlling the transceiver 1330 based on the computer executable instructions stored in the memory 1320.

Specific implementations of components/devices of the electronic device in this embodiment of this application may be implemented with reference to the method embodiment shown in FIG. 7 above. Details are not described herein again.

Therefore, a lane adjustment policy may be determined based on traveling information of a plurality of vehicles traveling on a road having a plurality of lanes, to adjust vehicles in a same driving mode to a same lane for traveling, thereby improving driving safety and road utilization.

It may be understood that the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any conventional processor.

The method steps in the embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. The storage medium may be a component of the processor. The processor and the storage medium may be located in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

It may be understood that various numeric numbers in the embodiments of this application are merely distinguishing for ease of description, and are not intended to limit the scope of the embodiments of this application.

## Claims

1. A vehicle regulation method, applied to a vehicle regulation device, wherein the method comprises:
obtaining (500) a currently used driving mode of a first vehicle on a target road and a currently used driving mode of a second vehicle on the target road; and
when the currently used driving mode of the first vehicle is different from the currently used driving mode of the second vehicle, determining (502) a driving mode adjustment policy by determining whether the currently used driving mode of the second vehicle belongs to supported driving modes of the first vehicle and whether the currently used driving mode of the first vehicle belongs to supported driving modes of the second vehicle;
wherein if the currently used driving mode of the first vehicle belongs to the supported driving modes of the second vehicle, the driving mode adjustment policy is adjusting the currently used driving mode of the second vehicle to the currently used driving mode of the first vehicle and
wherein the method further comprises:
sending the driving mode adjustment policy to the second vehicle, to request the second vehicle to adjust the currently used driving mode of the second vehicle to the currently used driving mode of the first vehicle according to the driving mode adjustment policy, wherein the driving mode adjustment policy comprises the currently used driving mode of the first vehicle; or
wherein if the currently used driving mode of the second vehicle belongs to the supported driving modes of the first vehicle, the adjustment policy is adjusting the currently used driving mode of the first vehicle to the currently used driving mode of the second vehicle; and
wherein the method further comprises:
sending the driving mode adjustment policy to the first vehicle, to request the first vehicle to adjust the currently used driving mode of the first vehicle to the currently used driving mode of the second vehicle according to the driving mode adjustment policy, wherein the driving mode adjustment policy comprises the currently used driving mode of the second vehicle.

2. The method according to claim 1, wherein the method further comprises:
receiving the supported driving modes of the first vehicle that are sent by the first vehicle, and receiving the supported driving modes of the second vehicle that are sent by the second vehicle.

3. The method according to claim 1 or 2, wherein the method further comprises:
obtaining traveling information of the first vehicle and traveling information of the second vehicle; and
determining the supported driving modes of the first vehicle based on the traveling information of the first vehicle, and determining the supported driving modes of the second vehicle based on the traveling information of the second vehicle.

4. The method according to claim 3, wherein the traveling information of the first vehicle comprises driver information of the first vehicle, and the traveling information of the second vehicle comprises driver information of the second vehicle;
the determining the supported driving modes of the first vehicle based on the traveling information of the first vehicle comprises:
determining a first manipulation capability level corresponding to the driver information of the first vehicle from a plurality of first preset manipulation capability levels; and
determining driving modes corresponding to the first manipulation capability level from a plurality of first preset driving modes as the supported driving modes of the first vehicle; and
the determining the supported driving modes of the second vehicle based on the traveling information of the second vehicle comprises:
determining a second manipulation capability level corresponding to the driver information of the second vehicle from a plurality of second preset manipulation capability levels; and
determining driving modes corresponding to the second manipulation capability level from a plurality of second preset driving modes as the supported driving modes of the second vehicle.

5. The method according to claim 3, wherein the traveling information of the first vehicle comprises passenger information of the first vehicle, and the traveling information of the second vehicle comprises passenger information of the second vehicle;
the determining the supported driving modes of the first vehicle based on the traveling information of the first vehicle comprises:
determining a first comfort requirement level corresponding to the passenger information of the first vehicle from a plurality of first preset comfort requirement levels; and
determining driving modes corresponding to the first comfort requirement level from a plurality of first preset driving modes as the supported driving modes of the first vehicle; and
the determining the supported driving modes of the second vehicle based on the traveling information of the second vehicle comprises:
determining a second comfort requirement level corresponding to the passenger information of the second vehicle from a plurality of second preset comfort requirement levels; and
determining driving modes corresponding to the second comfort requirement level from a plurality of second preset driving modes as the supported driving modes of the second vehicle.

6. The method according to claim 3, wherein the traveling information of the first vehicle comprises a vehicle performance parameter of the first vehicle, and the traveling information of the second vehicle comprises a vehicle performance parameter of the second vehicle;
the determining the supported driving modes of the first vehicle based on the traveling information of the first vehicle comprises:
determining a first performance level corresponding to the vehicle performance parameter of the first vehicle from a plurality of first preset performance levels; and
determining driving modes corresponding to the first performance level from a plurality of first preset driving modes as the supported driving modes of the first vehicle; and
the determining the supported driving modes of the second vehicle based on the traveling information of the second vehicle comprises:
determining a second performance level corresponding to the vehicle performance parameter of the second vehicle from a plurality of second preset performance levels; and
determining driving modes corresponding to the second performance level from a plurality of second preset driving modes as the supported driving modes of the second vehicle.

7. A vehicle regulation apparatus (800), wherein the apparatus comprises:
an obtaining unit (810), configured to obtain a currently used driving mode of a first vehicle on a target road and a currently used driving mode of a second vehicle on the target road; and
a determining unit (820), configured to: when the currently used driving mode of the first vehicle is different from the currently used driving mode of the second vehicle, determine a driving mode adjustment policy by determining whether the currently used driving mode of the second vehicle belongs to supported driving modes of the first vehicle and whether the currently used driving mode of the first vehicle belongs to supported driving modes of the second vehicle;
wherein if the currently used driving mode of the first vehicle belongs to the supported driving modes of the second vehicle, the driving mode adjustment policy is adjusting the currently used driving mode of the second vehicle to the currently used driving mode of the first vehicle; and
wherein the apparatus further comprises:
a sending unit, configured to send the driving mode adjustment policy to the second vehicle, to request the second vehicle to adjust the currently used driving mode of the second vehicle to the currently used driving mode of the first vehicle according to the driving mode adjustment policy, wherein the driving mode adjustment policy comprises the currently used driving mode of the first vehicle; or
wherein if the currently used driving mode of the second vehicle belongs to the supported driving modes of the first vehicle, the adjustment policy is adjusting the currently used driving mode of the first vehicle to the currently used driving mode of the second vehicle; and
wherein the apparatus further comprises:
a sending unit, configured to send the driving mode adjustment policy to the first vehicle, to request the first vehicle to adjust the currently used driving mode of the first vehicle to the currently used driving mode of the second vehicle according to the driving mode adjustment policy, wherein the driving mode adjustment policy comprises the currently used driving mode of the second vehicle.

8. The apparatus (800) according to claim 7, wherein the apparatus further comprises:
a receiving unit, configured to: receive the supported driving modes of the first vehicle that are sent by the first vehicle, and receive the supported driving modes of the second vehicle that are sent by the second vehicle.

9. The apparatus (800) according to claim 7, wherein
the obtaining unit (810) is further configured to obtain traveling information of the first vehicle and traveling information of the second vehicle; and
the determining unit (820) is further configured to: determine the supported driving modes of the first vehicle based on the traveling information of the first vehicle, and determine the supported driving modes of the second vehicle based on the traveling information of the second vehicle.

10. The apparatus (800) according to claim 9, wherein the traveling information of the first vehicle comprises driver information of the first vehicle, and the traveling information of the second vehicle comprises driver information of the second vehicle;
the determining unit (820) is further configured to determine a first manipulation capability level corresponding to the driver information of the first vehicle from a plurality of first preset manipulation capability levels;
the determining unit (820) is further configured to determine driving modes corresponding to the first manipulation capability level from a plurality of first preset driving modes as the supported driving modes of the first vehicle;
the determining unit (820) is further configured to determine a second manipulation capability level corresponding to the driver information of the second vehicle from a plurality of second preset manipulation capability levels; and
the determining unit (820) is further configured to determine driving modes corresponding to the second manipulation capability level from a plurality of second preset driving modes as the supported driving modes of the second vehicle.

11. The apparatus (800) according to claim 9, wherein the traveling information of the first vehicle comprises passenger information of the first vehicle, and the traveling information of the second vehicle comprises passenger information of the second vehicle;
the determining unit (820) is further configured to determine a first comfort requirement level corresponding to the passenger information of the first vehicle from a plurality of first preset comfort requirement levels;
the determining unit (820) is further configured to determine driving modes corresponding to the first comfort requirement level from a plurality of first preset driving modes as the supported driving modes of the first vehicle;
the determining unit (820) is further configured to determine a second comfort requirement level corresponding to the passenger information of the second vehicle from a plurality of second preset comfort requirement levels; and
the determining unit (820) is further configured to determine driving modes corresponding to the second comfort requirement level from a plurality of second preset driving modes as the supported driving modes of the second vehicle.

12. The apparatus (800) according to claim 1, wherein the traveling information of the first vehicle comprises a vehicle performance parameter of the first vehicle, and the traveling information of the second vehicle comprises a vehicle performance parameter of the second vehicle;
the determining unit (820) is further configured to determine a first performance level corresponding to the vehicle performance parameter of the first vehicle from a plurality of first preset performance levels;
the determining unit (820) is further configured to determine driving modes corresponding to the first performance level from a plurality of first preset driving modes as the supported driving modes of the first vehicle;
the determining unit (820) is further configured to determine a second performance level corresponding to the vehicle performance parameter of the second vehicle from a plurality of second preset performance levels; and
the determining unit (820) is further configured to determine driving modes corresponding to the second performance level from a plurality of second preset driving modes as the supported driving modes of the second vehicle.

## Patentansprüche

1. Fahrzeugregelungsverfahren, angewandt auf eine Fahrzeugregelungsvorrichtung, wobei das Verfahren umfasst:
Erhalten (500) eines aktuell verwendeten Fahrmodus eines ersten Fahrzeugs auf einer Zielstraße und eines aktuell verwendeten Fahrmodus eines zweiten Fahrzeugs auf der Zielstraße; und
wenn sich der aktuell verwendete Fahrmodus des ersten Fahrzeugs von dem aktuell verwendeten Fahrmodus des zweiten Fahrzeugs unterscheidet, Bestimmen (502) einer Fahrmodus-Anpassungsrichtlinie durch Bestimmen, ob der aktuell verwendete Fahrmodus des zweiten Fahrzeugs zu unterstützten Fahrmodi des ersten Fahrzeugs gehört und ob der aktuell verwendete Fahrmodus des ersten Fahrzeugs zu unterstützten Fahrmodi des zweiten Fahrzeugs gehört;
wobei, falls der aktuell verwendete Fahrmodus des ersten Fahrzeugs zu den unterstützten Fahrmodi des zweiten Fahrzeugs gehört, die Fahrmodus-Anpassungsrichtlinie den aktuell verwendeten Fahrmodus des zweiten Fahrzeugs an den aktuell verwendeten Fahrmodus des ersten Fahrzeugs anpasst und
wobei das Verfahren ferner umfasst:
Senden der Fahrmodus-Anpassungsrichtlinie an das zweite Fahrzeug, um das zweite Fahrzeug aufzufordern, den aktuell verwendeten Fahrmodus des zweiten Fahrzeugs gemäß der Fahrmodus-Anpassungsrichtlinie an den aktuell verwendeten Fahrmodus des ersten Fahrzeugs anzupassen, wobei die Fahrmodus-Anpassungsrichtlinie den aktuell verwendeten Fahrmodus des ersten Fahrzeugs umfasst; oder
wobei, falls der aktuell verwendete Fahrmodus des zweiten Fahrzeugs zu den unterstützten Fahrmodi des ersten Fahrzeugs gehört, die Anpassungsrichtlinie den aktuell verwendeten Fahrmodus des ersten Fahrzeugs an den aktuell verwendeten Fahrmodus des zweiten Fahrzeugs anpasst; und
wobei das Verfahren ferner umfasst:
Senden der Fahrmodus-Anpassungsrichtlinie an das erste Fahrzeug, um das erste Fahrzeug aufzufordern, den aktuell verwendeten Fahrmodus des ersten Fahrzeugs gemäß der Fahrmodus-Anpassungsrichtlinie an den aktuell verwendeten Fahrmodus des zweiten Fahrzeugs anzupassen, wobei die Fahrmodus-Anpassungsrichtlinie den aktuell verwendeten Fahrmodus des zweiten Fahrzeugs umfasst.

2. Verfahren nach Anspruch 1, wobei das Verfahren ferner umfasst:
Empfangen der unterstützten Fahrmodi des ersten Fahrzeugs, die von dem ersten Fahrzeug gesendet werden, und Empfangen der unterstützten Fahrmodi des zweiten Fahrzeugs, die von dem zweiten Fahrzeug gesendet werden.

3. Verfahren nach Anspruch 1 oder 2, wobei das Verfahren ferner umfasst:
Erhalten von Fahrinformationen des ersten Fahrzeugs und Fahrinformationen des zweiten Fahrzeugs; und
Bestimmen der unterstützten Fahrmodi des ersten Fahrzeugs basierend auf den Fahrinformationen des ersten Fahrzeugs und Bestimmen der unterstützten Fahrmodi des zweiten Fahrzeugs basierend auf den Fahrinformationen des zweiten Fahrzeugs.

4. Verfahren nach Anspruch 3, wobei die Fahrinformationen des ersten Fahrzeugs Fahrerinformationen des ersten Fahrzeugs umfassen und die Fahrinformationen des zweiten Fahrzeugs Fahrerinformationen des zweiten Fahrzeugs umfassen;
das Bestimmen der unterstützten Fahrmodi des ersten Fahrzeugs basierend auf den Fahrinformationen des ersten Fahrzeugs umfasst:
Bestimmen eines ersten Manipulationsfähigkeitsniveaus, das den Fahrerinformationen des ersten Fahrzeugs entspricht, aus einer Vielzahl von ersten voreingestellten Manipulationsfähigkeitsniveaus; und
Bestimmen von Fahrmodi, die dem ersten Manipulationsfähigkeitsniveau entsprechen, aus einer Vielzahl von ersten voreingestellten Fahrmodi als die unterstützten Fahrmodi des ersten Fahrzeugs; und
das Bestimmen der unterstützten Fahrmodi des zweiten Fahrzeugs basierend auf den Fahrinformationen des zweiten Fahrzeugs umfasst:
Bestimmen eines zweiten Manipulationsfähigkeitsniveaus, das den Fahrerinformationen des zweiten Fahrzeugs entspricht, aus einer Vielzahl von zweiten voreingestellten Manipulationsfähigkeitsniveaus; und
Bestimmen von Fahrmodi, die dem zweiten Manipulationsfähigkeitsniveau entsprechen, aus einer Vielzahl von zweiten voreingestellten Fahrmodi als die unterstützten Fahrmodi des zweiten Fahrzeugs.

5. Verfahren nach Anspruch 3, wobei die Fahrinformationen des ersten Fahrzeugs Fahrgastinformationen des ersten Fahrzeugs umfassen und die Fahrinformationen des zweiten Fahrzeugs Fahrgastinformationen des zweiten Fahrzeugs umfassen; das Bestimmen der unterstützten Fahrmodi des ersten Fahrzeugs basierend auf den Fahrinformationen des ersten Fahrzeugs umfasst:
Bestimmen eines ersten Komfortanforderungsniveaus, das den Fahrgastinformationen des ersten Fahrzeugs entspricht, aus einer Vielzahl von ersten voreingestellten Komfortanforderungsniveaus; und
Bestimmen von Fahrmodi, die dem ersten Komfortanforderungsniveau entsprechen, aus einer Vielzahl von ersten voreingestellten Fahrmodi als die unterstützten Fahrmodi des ersten Fahrzeugs; und
das Bestimmen der unterstützten Fahrmodi des zweiten Fahrzeugs basierend auf den Fahrinformationen des zweiten Fahrzeugs umfasst:
Bestimmen eines zweiten Komfortanforderungsniveaus, das den Fahrgastinformationen des zweiten Fahrzeugs entspricht, aus einer Vielzahl von zweiten voreingestellten Komfortanforderungsniveaus; und
Bestimmen von Fahrmodi, die dem zweiten Komfortanforderungsniveau entsprechen, aus einer Vielzahl von zweiten voreingestellten Fahrmodi als die unterstützten Fahrmodi des zweiten Fahrzeugs.

6. Verfahren nach Anspruch 3, wobei die Fahrinformationen des ersten Fahrzeugs einen Fahrzeugleistungsparameter des ersten Fahrzeugs umfassen und die Fahrinformationen des zweiten Fahrzeugs einen Fahrzeugleistungsparameter des zweiten Fahrzeugs umfassen;
das Bestimmen der unterstützten Fahrmodi des ersten Fahrzeugs basierend auf den Fahrinformationen des ersten Fahrzeugs umfasst:
Bestimmen eines ersten Leistungsniveaus, das dem Fahrzeugleistungsparameter des ersten Fahrzeugs entspricht, aus einer Vielzahl von ersten voreingestellten Leistungsniveaus; und
Bestimmen von Fahrmodi, die dem ersten Leistungsniveau entsprechen, aus einer Vielzahl von ersten voreingestellten Fahrmodi als die unterstützten Fahrmodi des ersten Fahrzeugs; und
das Bestimmen der unterstützten Fahrmodi des zweiten Fahrzeugs basierend auf den Fahrinformationen des zweiten Fahrzeugs umfasst:
Bestimmen eines zweiten Leistungsniveaus, das dem Fahrzeugleistungsparameter des zweiten Fahrzeugs entspricht, aus einer Vielzahl von zweiten voreingestellten Leistungsniveaus; und
Bestimmen von Fahrmodi, die dem zweiten Leistungsniveau entsprechen, aus einer Vielzahl von zweiten voreingestellten Fahrmodi als die unterstützten Fahrmodi des zweiten Fahrzeugs.

7. Fahrzeugregelungseinrichtung (800), wobei die Einrichtung umfasst:
eine Erhaltungseinheit (810), die konfiguriert ist, um einen aktuell verwendeten Fahrmodus eines ersten Fahrzeugs auf einer Zielstraße und einen aktuell verwendeten Fahrmodus eines zweiten Fahrzeugs auf der Zielstraße zu erhalten; und
eine Bestimmungseinheit (820), die konfiguriert ist zum: wenn sich der aktuell verwendete Fahrmodus des ersten Fahrzeugs von dem aktuell verwendeten Fahrmodus des zweiten Fahrzeugs unterscheidet, Bestimmen einer Fahrmodus-Anpassungsrichtlinie durch Bestimmen, ob der aktuell verwendete Fahrmodus des zweiten Fahrzeugs zu unterstützten Fahrmodi des ersten Fahrzeugs gehört und ob der aktuell verwendete Fahrmodus des ersten Fahrzeugs zu unterstützten Fahrmodi des zweiten Fahrzeugs gehört;
wobei, falls der aktuell verwendete Fahrmodus des ersten Fahrzeugs zu den unterstützten Fahrmodi des zweiten Fahrzeugs gehört, die Fahrmodus-Anpassungsrichtlinie den aktuell verwendeten Fahrmodus des zweiten Fahrzeugs an den aktuell verwendeten Fahrmodus des ersten Fahrzeugs anpasst; und
wobei die Einrichtung ferner umfasst:
eine Sendeeinheit, die konfiguriert ist, um die Fahrmodus-Anpassungsrichtlinie an das zweite Fahrzeug zu senden, um das zweite Fahrzeug aufzufordern, den aktuell verwendeten Fahrmodus des zweiten Fahrzeugs gemäß der Fahrmodus-Anpassungsrichtlinie an den aktuell verwendeten Fahrmodus des ersten Fahrzeugs anzupassen, wobei die Fahrmodus-Anpassungsrichtlinie den aktuell verwendeten Fahrmodus des ersten Fahrzeugs umfasst; oder
wobei, falls der aktuell verwendete Fahrmodus des zweiten Fahrzeugs zu den unterstützten Fahrmodi des ersten Fahrzeugs gehört, die Anpassungsrichtlinie den aktuell verwendeten Fahrmodus des ersten Fahrzeugs an den aktuell verwendeten Fahrmodus des zweiten Fahrzeugs anpasst; und
wobei die Einrichtung ferner umfasst:
eine Sendeeinheit, die konfiguriert ist, um die Fahrmodus-Anpassungsrichtlinie an das erste Fahrzeug zu senden, um das erste Fahrzeug aufzufordern, den aktuell verwendeten Fahrmodus des ersten Fahrzeugs gemäß der Fahrmodus-Anpassungsrichtlinie an den aktuell verwendeten Fahrmodus des zweiten Fahrzeugs anzupassen, wobei die Fahrmodus-Anpassungsrichtlinie den aktuell verwendeten Fahrmodus des zweiten Fahrzeugs umfasst.

8. Einrichtung (800) nach Anspruch 7, wobei die Einrichtung ferner umfasst:
eine Empfangseinheit, die konfiguriert ist zum: Empfangen der unterstützten Fahrmodi des ersten Fahrzeugs, die von dem ersten Fahrzeug gesendet werden, und
Empfangen der unterstützten Fahrmodi des zweiten Fahrzeugs, die von dem zweiten Fahrzeug gesendet werden.

9. Einrichtung (800) nach Anspruch 7, wobei
die Erhaltungseinheit (810) ferner konfiguriert ist, um Fahrinformationen des ersten Fahrzeugs und Fahrinformationen des zweiten Fahrzeugs zu erhalten; und
die Bestimmungseinheit (820) ferner konfiguriert ist zum: Bestimmen der unterstützten Fahrmodi des ersten Fahrzeugs basierend auf den Fahrinformationen des ersten Fahrzeugs und Bestimmen der unterstützten Fahrmodi des zweiten Fahrzeugs basierend auf den Fahrinformationen des zweiten Fahrzeugs.

10. Einrichtung (800) nach Anspruch 9, wobei die Fahrinformationen des ersten Fahrzeugs Fahrerinformationen des ersten Fahrzeugs umfassen und die Fahrinformationen des zweiten Fahrzeugs Fahrerinformationen des zweiten Fahrzeugs umfassen;
die Bestimmungseinheit (820) ferner konfiguriert ist, um ein erstes Manipulationsfähigkeitsniveau, das den Fahrerinformationen des ersten Fahrzeugs entspricht, aus einer Vielzahl von ersten voreingestellten Manipulationsfähigkeitsniveaus zu bestimmen;
die Bestimmungseinheit (820) ferner konfiguriert ist, um Fahrmodi, die dem ersten Manipulationsfähigkeitsniveau entsprechen, aus einer Vielzahl von ersten voreingestellten Fahrmodi als die unterstützten Fahrmodi des ersten Fahrzeugs zu bestimmen;
die Bestimmungseinheit (820) ferner konfiguriert ist, um ein zweites Manipulationsfähigkeitsniveau, das den Fahrerinformationen des zweiten Fahrzeugs entspricht, aus einer Vielzahl von zweiten voreingestellten Manipulationsfähigkeitsniveaus zu bestimmen; und
die Bestimmungseinheit (820) ferner konfiguriert ist, um Fahrmodi, die dem zweiten Manipulationsfähigkeitsniveau entsprechen, aus einer Vielzahl von zweiten voreingestellten Fahrmodi als die unterstützten Fahrmodi des zweiten Fahrzeugs zu bestimmen.

11. Einrichtung (800) nach Anspruch 9, wobei die Fahrinformationen des ersten Fahrzeugs Fahrgastinformationen des ersten Fahrzeugs umfassen und die Fahrinformationen des zweiten Fahrzeugs Fahrgastinformationen des zweiten Fahrzeugs umfassen;
die Bestimmungseinheit (820) ferner konfiguriert ist, um ein erstes Komfortanforderungsniveau, das den Fahrgastinformationen des ersten Fahrzeugs entspricht, aus einer Vielzahl von ersten voreingestellten Komfortanforderungsniveaus zu bestimmen;
die Bestimmungseinheit (820) ferner konfiguriert ist, um Fahrmodi, die dem ersten Komfortanforderungsniveau entsprechen, aus einer Vielzahl von ersten voreingestellten Fahrmodi als die unterstützten Fahrmodi des ersten Fahrzeugs zu bestimmen;
die Bestimmungseinheit (820) ferner konfiguriert ist, um ein zweites Komfortanforderungsniveau, das den Fahrgastinformationen des zweiten Fahrzeugs entspricht, aus einer Vielzahl von zweiten voreingestellten Komfortanforderungsniveaus zu bestimmen; und
die Bestimmungseinheit (820) ferner konfiguriert ist, Fahrmodi, die dem zweiten Komfortanforderungsniveau entsprechen, aus einer Vielzahl von zweiten voreingestellten Fahrmodi als die unterstützten Fahrmodi des zweiten Fahrzeugs zu bestimmen.

12. Einrichtung (800) nach Anspruch 1, wobei die Fahrinformationen des ersten Fahrzeugs einen Fahrzeugleistungsparameter des ersten Fahrzeugs umfassen und die Fahrinformationen des zweiten Fahrzeugs einen Fahrzeugleistungsparameter des zweiten Fahrzeugs umfassen;
die Bestimmungseinheit (820) ferner konfiguriert ist, um ein erstes Leistungsniveau, das dem Fahrzeugleistungsparameter des ersten Fahrzeugs entspricht, aus einer Vielzahl von ersten voreingestellten Leistungsniveaus zu bestimmen;
die Bestimmungseinheit (820) ferner konfiguriert ist, um Fahrmodi, die dem ersten Leistungsniveau entsprechen, aus einer Vielzahl von ersten voreingestellten Fahrmodi als die unterstützten Fahrmodi des ersten Fahrzeugs zu bestimmen;
die Bestimmungseinheit (820) ferner konfiguriert ist, um ein zweites Leistungsniveau, das dem Fahrzeugleistungsparameter des zweiten Fahrzeugs entspricht, aus einer Vielzahl von zweiten voreingestellten Leistungsniveaus zu bestimmen; und
die Bestimmungseinheit (820) ferner konfiguriert ist, um Fahrmodi, die dem zweiten Leistungsniveau entsprechen, aus einer Vielzahl von zweiten voreingestellten Fahrmodi als die unterstützten Fahrmodi des zweiten Fahrzeugs zu bestimmen.

## Revendications

1. Procédé de régulation de véhicule, appliqué à un dispositif de régulation de véhicule, dans lequel le procédé comprend :
l'obtention (500) d'un mode de conduite actuellement utilisé d'un premier véhicule sur une route cible et d'un mode de conduite actuellement utilisé d'un second véhicule sur la route cible ; et
lorsque le mode de conduite actuellement utilisé du premier véhicule est différent du mode de conduite actuellement utilisé du second véhicule, la détermination (502) d'une politique d'ajustement de mode de conduite en déterminant si le mode de conduite actuellement utilisé du second véhicule appartient à des modes de conduite pris en charge du premier véhicule et si le mode de conduite actuellement utilisé du premier véhicule appartient à des modes de conduite pris en charge du second véhicule ;
dans lequel, si le mode de conduite actuellement utilisé du premier véhicule appartient aux modes de conduite pris en charge du second véhicule, la politique d'ajustement de mode de conduite consiste à ajuster le mode de conduite actuellement utilisé du second véhicule au mode de conduite actuellement utilisé du premier véhicule, et
dans lequel le procédé comprend en outre :
l'envoi de la politique d'ajustement de mode de conduite au second véhicule, pour demander au second véhicule d'ajuster le mode de conduite actuellement utilisé du second véhicule au mode de conduite actuellement utilisé du premier véhicule selon la politique d'ajustement de mode de conduite, dans lequel la politique d'ajustement de mode de conduite comprend le mode de conduite actuellement utilisé du premier véhicule ; ou
dans lequel, si le mode de conduite actuellement utilisé du second véhicule appartient aux modes de conduite pris en charge du premier véhicule, la politique d'ajustement consiste à ajuster le mode de conduite actuellement utilisé du premier véhicule au mode de conduite actuellement utilisé du second véhicule ; et
dans lequel le procédé comprend en outre :
l'envoi de la politique d'ajustement de mode de conduite au premier véhicule, pour demander au premier véhicule d'ajuster le mode de conduite actuellement utilisé du premier véhicule au mode de conduite actuellement utilisé du second véhicule selon la politique d'ajustement de mode de conduite, dans lequel la politique d'ajustement de mode de conduite comprend le mode de conduite actuellement utilisé du second véhicule.

2. Procédé selon la revendication 1, dans lequel le procédé comprend en outre :
la réception des modes de conduite pris en charge du premier véhicule qui sont envoyés par le premier véhicule, et la réception des modes de conduite pris en charge du second véhicule qui sont envoyés par le second véhicule.

3. Procédé selon la revendication 1 ou 2, dans lequel le procédé comprend en outre :
l'obtention d'informations de déplacement du premier véhicule et d'informations de déplacement du second véhicule ; et
la détermination des modes de conduite pris en charge du premier véhicule sur la base des informations de déplacement du premier véhicule, et la détermination des modes de conduite pris en charge du second véhicule sur la base des informations de déplacement du second véhicule.

4. Procédé selon la revendication 3, dans lequel les informations de déplacement du premier véhicule comprennent des informations de conducteur du premier véhicule, et les informations de déplacement du second véhicule comprennent des informations de conducteur du second véhicule ;
la détermination des modes de conduite pris en charge du premier véhicule sur la base des informations de déplacement du premier véhicule comprend :
la détermination d'un premier niveau de capacité de manipulation correspondant aux informations de conducteur du premier véhicule à partir d'une pluralité de premiers niveaux de capacité de manipulation prédéfinis ; et
la détermination de modes de conduite correspondant au premier niveau de capacité de manipulation à partir d'une pluralité de premiers modes de conduite prédéfinis comme modes de conduite pris en charge du premier véhicule ; et
la détermination des modes de conduite pris en charge du second véhicule sur la base des informations de déplacement du second véhicule comprend :
la détermination d'un second niveau de capacité de manipulation correspondant aux informations de conducteur du second véhicule à partir d'une pluralité de seconds niveaux de capacité de manipulation prédéfinis ; et
la détermination de modes de conduite correspondant au second niveau de capacité de manipulation à partir d'une pluralité de seconds modes de conduite prédéfinis comme modes de conduite pris en charge du second véhicule.

5. Procédé selon la revendication 3, dans lequel les informations de déplacement du premier véhicule comprennent des informations de passager du premier véhicule, et les informations de déplacement du second véhicule comprennent des informations de passager du second véhicule ;
la détermination des modes de conduite pris en charge du premier véhicule sur la base des informations de déplacement du premier véhicule comprend :
la détermination d'un premier niveau d'exigence de confort correspondant aux informations de passager du premier véhicule à partir d'une pluralité de premiers niveaux d'exigence de confort prédéfinis ; et
la détermination de modes de conduite correspondant au premier niveau d'exigence de confort à partir d'une pluralité de premiers modes de conduite prédéfinis comme modes de conduite pris en charge du premier véhicule ; et
la détermination des modes de conduite pris en charge du second véhicule sur la base des informations de déplacement du second véhicule comprend :
la détermination d'un second niveau d'exigence de confort correspondant aux informations de passagers du second véhicule à partir d'une pluralité de seconds niveaux d'exigence de confort prédéfinis ; et
la détermination de modes de conduite correspondant au second niveau d'exigence de confort à partir d'une pluralité de seconds modes de conduite prédéfinis comme modes de conduite pris en charge du second véhicule.

6. Procédé selon la revendication 3, dans lequel les informations de déplacement du premier véhicule comprennent un paramètre de performance de véhicule du premier véhicule, et les informations de déplacement du second véhicule comprennent un paramètre de performance de véhicule du second véhicule ;
la détermination des modes de conduite pris en charge du premier véhicule sur la base des informations de déplacement du premier véhicule comprend :
la détermination d'un premier niveau de performance correspondant au paramètre de performance de véhicule du premier véhicule à partir d'une pluralité de premiers niveaux de performance prédéfinis ; et
la détermination de modes de conduite correspondant au premier niveau de performance à partir d'une pluralité de premiers modes de conduite prédéfinis comme modes de conduite pris en charge du premier véhicule ; et
la détermination des modes de conduite pris en charge du second véhicule sur la base des informations de déplacement du second véhicule comprend :
la détermination d'un second niveau de performance correspondant au paramètre de performance de véhicule du second véhicule à partir d'une pluralité de seconds niveaux de performance prédéfinis ; et
la détermination de modes de conduite correspondant au second niveau de performance à partir d'une pluralité de seconds modes de conduite prédéfinis comme modes de conduite pris en charge du second véhicule.

7. Appareil de régulation de véhicule (800), dans lequel l'appareil comprend :
une unité d'obtention (810), configurée pour obtenir un mode de conduite actuellement utilisé d'un premier véhicule sur une route cible et un mode de conduite actuellement utilisé d'un second véhicule sur la route cible ; et
une unité de détermination (820), configurée pour : lorsque le mode de conduite actuellement utilisé du premier véhicule est différent du mode de conduite actuellement utilisé du second véhicule, déterminer une politique d'ajustement de mode de conduite en déterminant si le mode de conduite actuellement utilisé du second véhicule appartient à des modes de conduite pris en charge du premier véhicule et si le mode de conduite actuellement utilisé du premier véhicule appartient à des modes de conduite pris en charge du second véhicule ;
dans lequel, si le mode de conduite actuellement utilisé du premier véhicule appartient aux modes de conduite pris en charge du second véhicule, la politique d'ajustement de mode de conduite consiste à ajuster le mode de conduite actuellement utilisé du second véhicule au mode de conduite actuellement utilisé du premier véhicule ; et
dans lequel l'appareil comprend en outre :
une unité d'envoi, configurée pour envoyer la politique d'ajustement de mode de conduite au second véhicule, pour demander au second véhicule d'ajuster le mode de conduite actuellement utilisé du second véhicule au mode de conduite actuellement utilisé du premier véhicule selon la politique d'ajustement de mode de conduite, dans lequel la politique d'ajustement de mode de conduite comprend le mode de conduite actuellement utilisé du premier véhicule ; ou
dans lequel, si le mode de conduite actuellement utilisé du second véhicule appartient aux modes de conduite pris en charge du premier véhicule, la politique d'ajustement consiste à ajuster le mode de conduite actuellement utilisé du premier véhicule au mode de conduite actuellement utilisé du second véhicule ; et
dans lequel l'appareil comprend en outre :
une unité d'envoi, configurée pour envoyer la politique d'ajustement de mode de conduite au premier véhicule, pour demander au premier véhicule d'ajuster le mode de conduite actuellement utilisé du premier véhicule au mode de conduite actuellement utilisé du second véhicule selon la politique d'ajustement de mode de conduite, dans lequel la politique d'ajustement de mode de conduite comprend le mode de conduite actuellement utilisé du second véhicule.

8. Appareil (800) selon la revendication 7, dans lequel l'appareil comprend en outre :
une unité de réception, configurée pour : recevoir les modes de conduite pris en charge du premier véhicule qui sont envoyés par le premier véhicule, et recevoir les modes de conduite pris en charge du second véhicule qui sont envoyés par le second véhicule.

9. Appareil (800) selon la revendication 7, dans lequel
l'unité d'obtention (810) est en outre configurée pour obtenir des informations de déplacement du premier véhicule et des informations de déplacement du second véhicule ; et
l'unité de détermination (820) est en outre configurée pour : déterminer les modes de conduite pris en charge du premier véhicule sur la base des informations de déplacement du premier véhicule, et déterminer les modes de conduite pris en charge du second véhicule sur la base des informations de déplacement du second véhicule.

10. Appareil (800) selon la revendication 9, dans lequel les informations de déplacement du premier véhicule comprennent des informations de conducteur du premier véhicule, et les informations de déplacement du second véhicule comprennent des informations de conducteur du second véhicule ;
l'unité de détermination (820) est en outre configurée pour déterminer un premier niveau de capacité de manipulation correspondant aux informations de conducteur du premier véhicule à partir d'une pluralité de premiers niveaux de capacité de manipulation prédéfinis ;
l'unité de détermination (820) est en outre configurée pour déterminer des modes de conduite correspondant au premier niveau de capacité de manipulation à partir d'une pluralité de premiers modes de conduite prédéfinis comme modes de conduite pris en charge du premier véhicule ;
l'unité de détermination (820) est en outre configurée pour déterminer un second niveau de capacité de manipulation correspondant aux informations de conducteur du second véhicule à partir d'une pluralité de seconds niveaux de capacité de manipulation prédéfinis ; et
l'unité de détermination (820) est en outre configurée pour déterminer des modes de conduite correspondant au second niveau de capacité de manipulation à partir d'une pluralité de seconds modes de conduite prédéfinis comme modes de conduite pris en charge du second véhicule.

11. Appareil (800) selon la revendication 9, dans lequel les informations de déplacement du premier véhicule comprennent des informations de passager du premier véhicule, et les informations de déplacement du second véhicule comprennent des informations de passager du second véhicule ;
l'unité de détermination (820) est en outre configurée pour déterminer un premier niveau d'exigence de confort correspondant aux informations de passager du premier véhicule à partir d'une pluralité de premiers niveaux d'exigence de confort prédéfinis ; l'unité de détermination (820) est en outre configurée pour déterminer des modes de conduite correspondant au premier niveau d'exigence de confort à partir d'une pluralité de premiers modes de conduite prédéfinis comme modes de conduite pris en charge du premier véhicule ;
l'unité de détermination (820) est en outre configurée pour déterminer un second niveau d'exigence de confort correspondant aux informations de passager du second véhicule à partir d'une pluralité de seconds niveaux d'exigence de confort prédéfinis ; et
l'unité de détermination (820) est en outre configurée pour déterminer des modes de conduite correspondant au second niveau d'exigence de confort à partir d'une pluralité de seconds modes de conduite prédéfinis comme modes de conduite pris en charge du second véhicule.

12. Appareil (800) selon la revendication 1, dans lequel les informations de déplacement du premier véhicule comprennent un paramètre de performance de véhicule du premier véhicule, et les informations de déplacement du second véhicule comprennent un paramètre de performance de véhicule du second véhicule ;
l'unité de détermination (820) est en outre configurée pour déterminer un premier niveau de performance correspondant au paramètre de performance de véhicule du premier véhicule à partir d'une pluralité de premiers niveaux de performance prédéfinis ;
l'unité de détermination (820) est en outre configurée pour déterminer des modes de conduite correspondant au premier niveau de performance à partir d'une pluralité de premiers modes de conduite prédéfinis comme modes de conduite pris en charge du premier véhicule ;
l'unité de détermination (820) est en outre configurée pour déterminer un second niveau de performance correspondant au paramètre de performance de véhicule du second véhicule à partir d'une pluralité de seconds niveaux de performance prédéfinis ; et
l'unité de détermination (820) est en outre configurée pour déterminer des modes de conduite correspondant au second niveau de performance à partir d'une pluralité de seconds modes de conduite prédéfinis comme modes de conduite pris en charge du second véhicule.
